(19) Europäisches Patentamt
European Patent Office
Office européen des brevets

(11) EP 3 478 731 B1

(12) # EUROPEAN PATENT SPECIFICATION

(45) Date of publication and mention of the grant of the patent:
**05.08.2020 Bulletin 2020/32**

(21) Application number: **17742326.6**

(22) Date of filing: **29.06.2017**

(51) Int Cl.:
***C08F 210/16*** *(2006.01)* ***C08F 4/651*** *(2006.01)*
***C08F 4/654*** *(2006.01)* ***C08F 4/655*** *(2006.01)*

(86) International application number:
**PCT/US2017/040042**

(87) International publication number:
**WO 2018/005821 (04.01.2018 Gazette 2018/01)**

(54) **PROCATALYST COMPOSITIONS USEFUL FOR LOW COMONOMER INCORPORATION AND PROCESS FOR PREPARING THE SAME**

ZUR EINLAGERUNG MIT NIEDRIGEM COMONOMERGEHALT NÜTZLICHE PROKATALYSATORZUSAMMENSETZUNGEN UND VERFAHREN ZUR HERSTELLUNG DAVON

COMPOSITIONS DE PROCATALYSEUR UTILES POUR DE FAIBLES NIVEAUX D’INCORPORATION DE COMONOMÈRES ET LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2016 US 201662356888 P**

(43) Date of publication of application:
**08.05.2019 Bulletin 2019/19**

(73) Proprietor: **Dow Global Technologies LLC**
**Midland, MI 48674 (US)**

(72) Inventors:
- **CHEN, Linfeng**
**Freeport**
**TX 77541 (US)**
- **KARJALA, Teresa P.**
**Freeport**
**TX 77541 (US)**
- **DEMIRORS, Mehmet**
**Freeport**
**TX 77541 (US)**
- **GINGER, Douglas S.**
**Freeport**
**TX 77541 (US)**
- **SPRINGS, Marc A.**
**Freeport**
**TX 77541 (US)**

(74) Representative: **Boult Wade Tennant LLP**
**Salisbury Square House**
**8 Salisbury Square**
**London EC4Y 8AP (GB)**

(56) References cited:
**EP-A2- 0 589 474** **US-A- 4 218 339**
**US-A- 4 960 593**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 478 731 B1

## Description

### Field

Embodiments relate to procatalyst compositions useful for olefin polymerizations. More specifically, embodiments relate to solution process procatalyst compositions including electron donor modifiers, where the procatalyst compositions are useful for low comonomer incorporation in ethylene polymerization.

### Introduction

US 4,960,593 relates to the stabilization of the olefin polymers, for instance polypropylene, polyethylene and elastomeric propylene/ethylene/(diene) copolymers, which stabilization is carried out by adding a Hindered Amine Light stabilizer (HALS) type, either at the start, or during, or after polymerization is substantially complete, but before quenching the catalyst, which terminates the polymerization reaction.

Currently the demand for polyethylene worldwide is in excess of 80 million metric tons per year. Because there is a need for significant and continued differentiation of polymer products in the polyethylene business, researchers have devoted a great deal of effort to searching for process alterations that will yield such new products. One focus involves exploring new catalysts.

Ziegler-Natta catalysts remain the most extensively used catalysts in polyethylene (PE) production, including PE production by solution process. For solution process PE production that requires a linked reactor to produce a portion of polymer with high level of comonomer and another reactor to produce a portion of polymer with low level of comonomer, new catalysts with low comonomer incorporation capability are needed. A further reduction in comonomer incorporation would enhance the ability to increase the differences between those two portions of polymer in order to achieve property improvements for the overall polymer. However, the advancement in the solution process Ziegler-Natta PE catalysts has been limited over the last few decades. One of the major challenges facing catalyst development for the solution process is the harsh reaction environment due to the combination of high reactor temperature and the presence of highly reactive cocatalysts (e.g., triethylaluminum).

Accordingly, a need exists for new solution process Ziegler-Natta PE catalysts with low comonomer incorporation capabilities that are able to survive the harsh conditions of the solution process. A need also exists for a process for preparing these new catalysts that is not hindered by tedious, complex procedures such as purification of components or removal of excess components. Such a need would be met, for example, through a one-pot process for preparing the catalysts with no separation or purification of any component required.

### Summary

In the first aspect of the present invention, there is provided the process of claim 1. In a further aspect of the present invention, there is provided the solution process of claim 2. In a further aspect of the present invention, there is provided the process of claim 3. In a further aspect of the present invention, there is provided the solution process of claim 4. In a further aspect of the present invention, there is provided the process of claim 5. In a further aspect of the present invention, there is provided the solution process of claim 6.

The present disclosure relates to a procatalyst composition comprising a titanium moiety, a magnesium chloride support, a hydrocarbon solution in which the magnesium chloride support is formed, and an electron donor modifier having the formula (II):

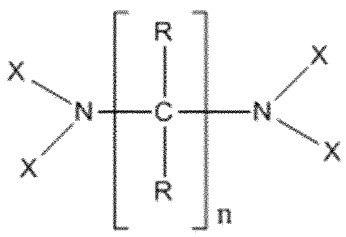

(II),

wherein:

n is from 3 to 12;
R is hydrogen or a $C_1$-$C_{20}$ hydrocarbyl that is optionally substituted with one or more heteroatoms; and
X is hydrogen or a $C_1$-$C_{20}$ hydrocarbyl that is optionally substituted with one or more heteroatoms.

The present disclosure relates to a procatalyst composition comprising a titanium moiety, a magnesium chloride support, a hydrocarbon solution in which the magnesium chloride support is formed, and an electron donor modifier having the formula (III):

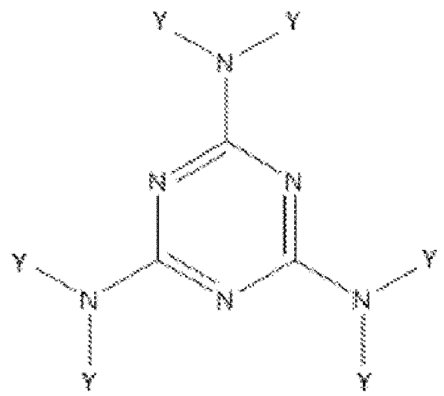

(III),

wherein:
Y is hydrogen or a $C_1$-$C_{20}$ hydrocarbyl that is optionally substituted with one or more heteroatoms.

The present disclosure relates to a procatalyst composition comprising a titanium moiety, a magnesium chloride support, a hydrocarbon solution in which the magnesium chloride support is formed, and an electron donor modifier, wherein the electron donor modifier is an oligomeric or polymeric compound comprising more than one unit of at least one of the following:

(a) a compound having the formula (II):

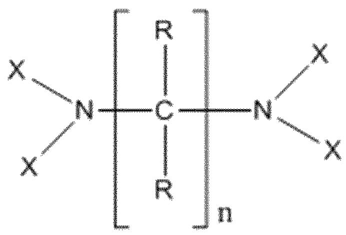

(II),

(b) a compound having the formula (III):

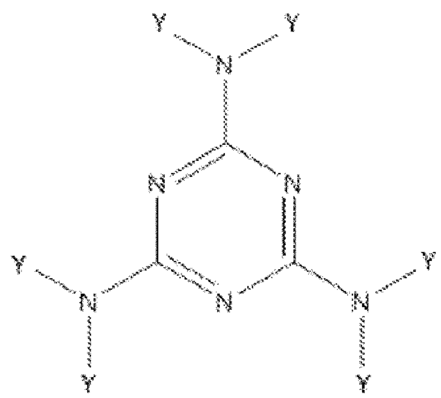

(III),

or
(c) a compound having a substituted or unsubstituted piperidyl group, wherein

n is from 3 to 12; R is hydrogen or a $C_1$-$C_{20}$ hydrocarbyl that is optionally substituted with one or more heteroatoms; X is hydrogen or a $C_1$-$C_{20}$ hydrocarbyl that is optionally substituted with one or more heteroatoms; and Y is hydrogen or a $C_1$-$C_{20}$ hydrocarbyl that is optionally substituted with one or more heteroatoms.

The present disclosure relates to a one-pot process for preparing each of the above described procatalyst compositions.

The present disclosure relates to a solution process for polymerization of ethylene and at least one additional polymerizable monomer to form a polymer composition, the process comprising the steps of: contacting ethylene and the additional polymerizable monomer with a catalyst composition under polymerization conditions; wherein the catalyst composition comprises at least one of the above-identified procatalyst compositions and a cocatalyst; wherein the additional polymerizable momoner is a $C_{3-20}$ $\alpha$-olefin; and wherein the procatalyst composition is prepared according to a one-pot process.

The present disclosure relates to a solution process for polymerization of ethylene and at least one additional polymerizable monomer to form a polymer composition, the process comprising the steps of: contacting ethylene and the additional polymerizable monomer with a catalyst composition and an electron donor modifier under polymerization conditions; wherein the catalyst composition comprises a starting procatalyst composition and an alkyl-aluminum cocatalyst; wherein the additional polymerizable monomer is a $C_{3-20}$ $\alpha$-olefin; and wherein the electron donor modifier is an electron donor modifier described herein.

## Detailed Description

### *Definitions*

All references to the Periodic Table of the Elements refer to the Periodic Table of the Elements published and copyrighted by CRC Press, Inc., 1990. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure.

"Composition" means a mixture or blend of two or more components.

"Polymer" means a compound prepared by polymerizing monomers, whether of the same or a different type. The generic term polymer embraces the term homopolymer, usually employed to refer to polymers prepared from only one type of monomer, and the term interpolymer and copolymer as defined below. It also encompasses all forms of interpolymers, e.g., random, block, homogeneous, heterogeneous.

"Interpolymer" and "copolymer" mean a polymer prepared by the polymerization of at least two different types of monomers. These generic terms include both classical copolymers, i.e., polymers prepared from two different types of monomers, and polymers prepared from more than two different types of monomers, e.g., terpolymers, tetrapolymers. The terms "ethylene/alpha-olefin copolymer" and "propylene/alpha-olefin copolymer" are indicative of the terms "interpolymer" and "copolymer" used herein.

"Co-catalyst" or "cocatalyst" refers to those known in the art that can activate a transition metal procatalyst to form an active (final) catalyst composition.

"Starting procatalyst" or "working catalyst" as used herein refer to transition metal procatalysts that do not include electron donor modifiers. Typical starting procatalysts comprise a magnesium chloride support and titanium halide(s).

"Procatalyst composition" as used herein refers to a transition metal procatalyst that includes an electron donor modifier.

The term "electron donor modifier" used herein refers to electron donors that are added to working catalysts or starting procatalysts with the intention of modifying existing catalyst active sites. An electron donor modifier is distinct from internal donors. Internal donors are added during the formation of the working catalysts or starting procatalysts. For example, internal donors are added to a magnesium halide support prior to introduction of transition metals. A further example includes adding an internal donor to a magnesium support precursor during halogenation to convert the magnesium precursor into magnesium halide. As an internal donor, a donor molecule changes catalyst behavior primarily by blocking sites on a magnesium halide support from transition metal deposition and/or influencing the formation of the magnesium halide support where transition metal active sites reside. In contrast, an electron donor modifier is added to a working catalyst or starting procatalyst and is believed to interact with transition metal active sites. An electron donor modifier can be introduced to a working catalyst or starting procatalyst before, during, or after activation by a cocatalyst. It can be added directly to the working catalyst or starting procatalyst. It can also be premixed with a cocatalyst before adding to the working catalyst or starting procatalyst.

The term "unit" used herein refers to repeating structural units in a polymeric or oligomeric chain. There may be only one type of structural unit in a chain, or there may be more than one type of structural unit in a chain. For example, in a Chimassorb 2020 molecule (1), there are 2 types of repeating structural units, (2) and (3):

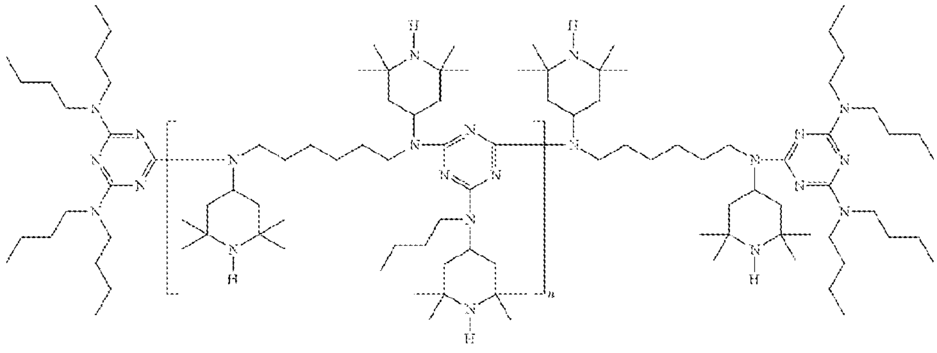

(1)

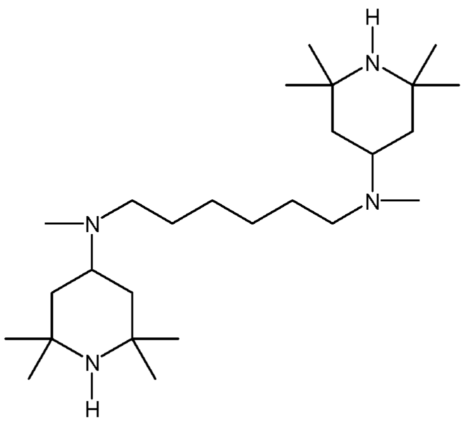

(2)

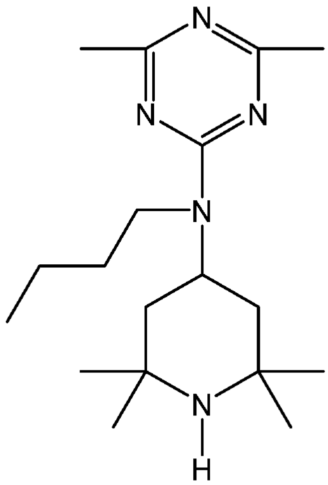

(3)

Furthermore, any other term disclosed herein refers to those known in the art and those known as appropriate by one of ordinary skill in the art for the present disclosures. *Magnesium halide support*

The procatalyst compositions of the present disclosure may be prepared beginning first with preparation of a magnesium halide support. Preparation of a magnesium halide support begins with selecting an organomagnesium compound or a complex including an organomagnesium compound. Such compound or complex is preferably soluble in an inert hydrocarbon diluent. In certain embodiments, the amounts of components are such that when the active halide, such as a metallic or non-metallic halide, and the magnesium complex are combined, the resultant slurry has a halide to magnesium ratio of 1.5 to 2.5 (e.g., 1.8 to 2.2). Examples of suitable inert organic diluents include liquefied ethane, propane, isobutane, n-butane, n-hexane, the various isomeric hexanes, heptane, isooctane, isoparaffinic fluids, paraffinic mixtures of alkanes having from 5 to 10 carbon atoms, cyclohexane, methylcyclopentane, dimethylcyclohexane, dodecane, industrial solvents composed of saturated or aromatic hydrocarbons such as kerosene, naphthas, and combinations thereof, especially when freed of any olefin compounds and other impurities, and including those having boiling

points in the range from about -50 °C to about 200 °C. Also included as suitable inert diluents are ethylbenzene, cumene, decalin and combinations thereof.

Suitable organomagnesium compounds and complexes may include, for example, magnesium C2-C8 alkyls and aryls, magnesium alkoxides and aryloxides, carboxylated magnesium alkoxides, and carboxylated magnesium aryloxides. Preferred sources of magnesium moieties may include the magnesium C2-C8 alkyls and C1-C4 alkoxides. Such organomagnesium compound or complex may be reacted with a metallic or non-metallic halide source, such as a chloride, bromide, iodide, or fluoride, in order to make a magnesium halide compound under suitable conditions. Such conditions may include a temperature ranging from -25 °C to 100 °C, preferably 0 °C to 50 °C; a time ranging from 0.1 to 12 hours, preferably from 4 to 6 hours; or both. The result is a magnesium halide support.

Suitable non-metallic halides are represented by the formula R'X wherein R' is hydrogen or an active monovalent organic radical and X is a halogen. Particularly suitable non-metallic halides include, for example, hydrogen halides and active organic halides such as t-alkyl halides, allyl halides, benzyl halides and other active hydrocarbyl halides, wherein hydrocarbyl is as defined hereinbefore. An active organic halide is meant as a hydrocarbyl halide that contains a labile halogen at least as active, i.e., as easily lost to another compound, as the halogen of sec-butyl chloride, preferably as active as t-butyl chloride. In addition to the organic monohalides, it is understood that organic dihalides, trihalides and other polyhalides that are active as defined hereinbefore are also suitably employed. Examples of preferred active non-metallic halides include hydrogen chloride, hydrogen bromide, t-butyl chloride, t-amyl bromide, allyl chloride, benzyl chloride, crotyl chloride, methylvinyl carbinyl chloride, $\alpha$-phenylethyl bromide, and diphenyl methyl chloride. Most preferred are hydrogen chloride, t-butyl chloride, allyl chloride and benzyl chloride.

Suitable metallic halides which can be employed herein include those represented by the formula $MR_{y-a}X_a$ wherein M is a metal of Groups IIB, IIIA or IVA of Mendeleev's Periodic Table of Elements, R is a monovalent organic radical, X is a halogen, y has a value corresponding to the valence of M, and a has a value from 1 to y. Preferred metallic halides are aluminum halides of the formula $AlR_{3-a}X_a$ wherein each R is independently hydrocarbyl as hereinbefore defined such as alkyl, X is a halogen and a is a number from 1 to 3. Most preferred are alkylaluminum halides such as ethylaluminum sesquichloride, diethylaluminum chloride, ethylaluminum dichloride, and diethylaluminum bromide, with ethylaluminum dichloride being especially preferred. Alternatively, a metal halide such as aluminum trichloride or a combination of aluminum trichloride with an alkyl aluminum halide or a trialkyl aluminum compound may be suitably employed.

As an optional step, the magnesium halide support is then reacted with a selected conditioning compound containing an element selected from the group consisting of aluminum, vanadium, zirconium, and hafnium under conditions suitable to form a conditioned magnesium halide support. This compound and the magnesium halide support are then brought into contact under conditions sufficient to result in a conditioned magnesium halide support. Such conditions may include a temperature ranging from 0 °C to 50 °C, preferably from 25 °C to 35 °C; a time ranging from 0.1 to 24 hours, preferably from 4 to 12 hours; or both. Such a temperature range includes ambient temperature.

*Starting Procatalyst*

Once the magnesium halide support is prepared and suitably aged, it is brought into contact with a titanium compound. In certain preferred embodiments, titanium halides or alkoxides, or combinations thereof, may be selected. Conditions may include a temperature within the range from 0 °C to 50 °C, preferably from 25 °C to 35 °C; a time of less than 10 minutes or a time from 0.1 hours to 24 hours, preferably from 6 hours to 12 hours; or both. Such a temperature range includes ambient temperature. The result of this step is adsorption of at least a portion of the titanium compound onto the magnesium halide support and formation of a starting procatalyst (i.e., working catalyst). In the preparation of the procatalyst, it is not necessary to separate hydrocarbon soluble components from hydrocarbon insoluble components.

Once the starting procatalyst has been formed, it may be used to form a final catalyst by combining it with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, or an alkaline earth metal hydride. The formation of the final catalyst from the reaction of the starting procatalyst and the organometallic cocatalyst may be carried out *in situ*, or just prior to entering the polymerization reactor. Thus, the combination of the cocatalyst and the starting procatalyst may occur under a wide variety of conditions. Such conditions may include, for example, contacting them under an inert atmosphere such as nitrogen, argon or other inert gas at temperatures in the range from 0 °C to 300 °C, preferably from 15 °C to 250 °C. In the preparation of the catalytic reaction product, it is not necessary to separate hydrocarbon soluble components from hydrocarbon insoluble components. Time for contact between the starting procatalyst and cocatalyst may desirably range, for example, from 0 to 240 seconds, preferably from 5 to 120 seconds. Various combinations of these conditions may be employed.

*Electron Donor Modifier Treatment*

In embodiments of the present disclosure, procatalyst compositions are formed by further treating the above described starting procatalysts with an electron donor modifier having the formula (II):

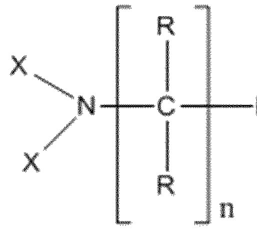

(II),

wherein:

n is from 3 to 12;
R is hydrogen or a $C_1$-$C_{20}$ hydrocarbyl that is optionally substituted with one or more heteroatoms; and
X is hydrogen or a $C_1$-$C_{20}$ hydrocarbyl that is optionally substituted with one or more heteroatoms.

In certain embodiments with respect to the electron donor modifier having the formula (II), R is hydrogen. In some embodiments with respect to the electron donor modifier having the formula (II), at least one X group is a substituted or unsubstituted 4,6-bis(dialkylamino)-1,3,5-triazin-2-yl group. In certain embodiments with respect to the electron donor modifier having the formula (II), at least one X group is a substituted or unsubstituted piperidyl group. In some embodiments, the electron donor modifier having the formula (II) is in oligomeric or polymeric form. In certain embodiments, the electron donor modifier having the formula (II) is in oligomeric or polymeric form and has a molecular weight (Mw) of greater than 1000 daltons. In certain embodiments, the electron donor modifier having the formula (II) is in oligomeric or polymeric form and is a hindered amine light stabilizer. In certain embodiments, the electron donor modifier having the formula (II) is soluble in a hydrocarbon solvent.

In embodiments of the present disclosure, procatalyst compositions are formed by further treating the above described starting procatalyst with an electron donor modifier having the formula (III):

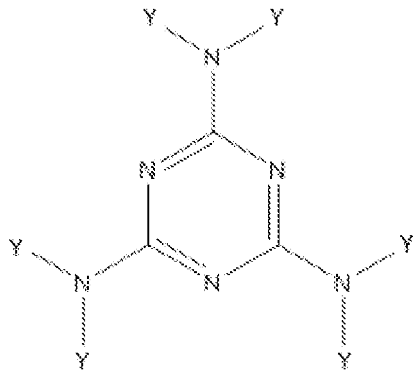

(III),

wherein:
Y is hydrogen or a $C_1$-$C_{20}$ hydrocarbyl that is optionally substituted with one or more heteroatoms.

In certain embodiments with respect to the electron donor modifier having the formula (III), at least one Y group is a substituted or unsubstituted aminoalkyl group. In some embodiments with respect to the electron donor modifier having the formula (III), at least one Y group is a substituted or unsubstituted piperidyl group. In certain embodiments, the electron donor modifier having the formula (III) is in oligomeric or polymeric form. In some embodiments, the electron donor modifier having the formula (III) is in oligomeric or polymeric form and has a molecular weight (Mw) of greater than 1000 daltons. In certain embodiments, the electron donor modifier having the formula (III) is in oligomeric or polymeric form and is a hindered amine light stabilizer. In certain embodiments, the electron donor modifier having the formula (III) is soluble in a hydrocarbon solvent.

In embodiments of the present disclosure, procatalyst compositions are formed by further treating the above described starting procatalysts with an electron donor modifier, wherein the electron donor modifier is an oligomeric or

polymeric compound comprising more than one unit of at least one of the following:

(a) a compound having the formula (II):

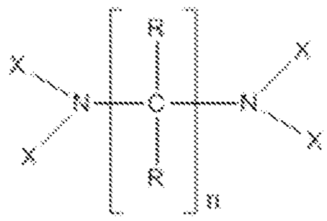

(II),

(b) a compound having the formula (III):

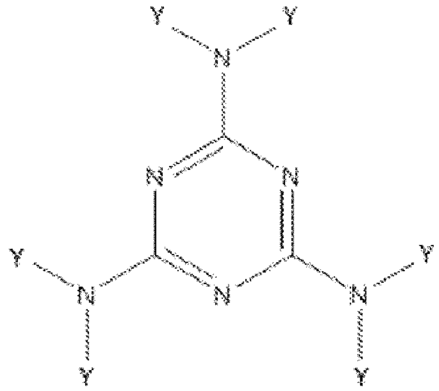

(III),

or

(c) a compound having a substituted or unsubstituted piperidyl group, wherein

n is from 3 to 12;
R is hydrogen or a $C_1$-$C_{20}$ hydrocarbyl that is optionally substituted with one or more heteroatoms;
X is hydrogen or a $C_1$-$C_{20}$ hydrocarbyl that is optionally substituted with one or more heteroatoms; and
Y is hydrogen or a $C_1$-$C_{20}$ hydrocarbyl that is optionally substituted with one or more heteroatoms.

In certain embodiments with respect to the electron donor modifier that is in oligomeric or polymeric form and comprises more than one unit of at least a compound having the formula (II), a compound having the formula (III), or a compound having a substituted or unsubstituted piperidyl group, the compound having a substituted or unsubstituted piperidyl group is 2,2,6,6-tetramethylpiperidyl. In some embodiments with respect to the electron donor modifier that is in oligomeric or polymeric form and comprises more than one unit of at least a compound having the formula (II), a compound having the formula (III), or a compound having a substituted or unsubstituted piperidyl group, the electron donor modifier is a hindered amine light stabilizer.

With respect to the present disclosure, suitable hindered amine light stabilizers include bis(2,2,6,6-tetramethylpiperidyl) sebacate, bis-5-(1,2,2,6,6-pentamethylpiperidyl) sebacate, n-butyl-3,5-di-tert-butyl-4-hydroxybenzyl malonic acid bis(1,2,2,6,6-pentamethylpiperidyl) ester, condensation product of 1-hydroxyethyl-2,2,6,6-tetramethyl-4-hydroxypiperidine and succinic acid, condensation product of N,N'-(2,2,6,6-tetramethylpiperidyl)hexamethylenediamine and 4-tert-octylamino-2,6-dichloro-1,3,5-triaine, tris(2,2,6,6-tetramethylpiperidyl)nitrilotriacetate, tetrakis(2,2,6,6-tetramethyl-4-piperidyl) butane-1,2,3,4-tetracarboxylate, 1,1'-ethylenebis(3,3,5,5-tetramethylpiperazinone) and mixtures thereof.

Suitable hindered amine light stabilizers further include those that are commercially available, including LOWILITE® 19, LOWILITE® 62, LOWILITE® 6294, LOWILITE® 77, LOWILITE® 7794, Bruggolen® L 20, Bruggolen® TP-L1206, Uvasorb® HA-88FD, Uvasorb® HA700, Polybatch® ACT 25, Polybatch® BFUV 1610, ADD-VANCE® FR 583 (formerly: ADD-FR 583), ADD-VANCE® UV 442 (formerly: ADD-UV 442), ADD-VANCE® UV 477, ADK STAB LA- 52, ADK STAB LA- 82, ADK STAB LA- 87, ADK STAB LA-402AF, ADK STAB LA-502XP, ADK STAB LA-402XP, ADK STAB LA-502, ADK STAB LA-52, ADK STAB LA-62, ADK STAB LA-63, MarkScreen™ HA-7123, MarkScreen™ HA-7622FB, MarkScreen™ HA-7622LD, MarkScreen™ HA-7765, MarkScreen™ HA-7944, Tinuvin® 111, Tinuvin® 123, Tinuvin®

123 S, Tinuvin® 144, Tinuvin® 494 AR, Plast UV PE UV-01, Plast UV PP UV-04, Hals GW 480(770), Hals GW 622, Hals GW-480, Hals GW-944z, BW-10LD(622), Tiangang™ HS-112, Tiangang™ HS-119, Tiangang™ HS-508(292), Tiangang™ HS-765, HALS 3346, HALS 622, HALS 770, HALS 944, Light stabilizer 2020, Biosorb 622, Biosorb 770, Biosorb 783, Biosorb 944, UV MASTERBATCH/203/10, UV MASTERBATCH/203/20, Chiguard® 622LD, Chiguard® 770, Chiguard® 770DF, Chiguard® 944LD, CESA® -light 7101, CESA® - light 7103, CESA® -light 7104, CESA® -light 7105, CESA® -light 7201, Cyasorb® UV-3346, Cyasorb® UV-3529, Cyasorb® UV-3853, Cyasorb® UV-3853PP5, Cyasorb® UV-3853S, OMNISTAB LS 123, OMNISTAB LS 292, OMNISTAB LS 622, OMNISTAB LS 770, OMNISTAB LS 944, Chisorb® 944, Aquastab Stabilizer PI181M-2-40%, Eustab LS-144, Eustab LS-292, Eustab LS-622, Eversorb 765, Eversorb 90, Eversorb 91, Eversorb 91 FD, Eversorb 94, SUNSORB LS-770, SUNSORB LS-770GF, Ferrostab PP UV 66-20, 5622, 5770, 5944, Dragonsorb -3853, Dragonsorb -622LD, Dragonsorb -770, Dragonsorb -783, Dragonsorb -944G, HILITE® -77, HILITE® -77G, HILITE® -B83, HILITE® -B83G, IP 1350, IP 1351, IP 1354, IP 1355, IP 1356, U.V. HALS -PA 04, U.V. HALS -PA 08, CB 08770 EVA, CB 73700 LL, TA 2410 CL, UV 00880 LL, UV 00990 LL, Keeneyes-LS 770, LS 622LD, Hisorb 770, Speedblock 622, Speedblock 770, Speedblock 783, Speedblock 791, Speedblock 944, LUVOBATCH® PA UV 5164, LUVOBATCH® PE UV 9854, LUVOBATCH® PP UV 5082, GUARD DOG™ UV119, GUARD DOG™ UV123, GUARD DOG™ UV292, GUARD DOG™ UV622, GUARD DOG™ UV770, Milestab 1084, Milestab 1164, Milestab 119, Milestab 123, Milestab 292, ALKAMIX™ MB-UV815, ALKAMIX™ MB-UV830, BLS® 1622, BLS® 1770, BLS® 1944, BLS® 123, BLS® 292, Micro UV 320H, CAPLIG 101, CAPLIG 292, CAPLIG 622, CAPLIG 770, CAPLIG 944, Oceanchem - Light Stabilizer 622, Oceanchem - Light Stabilizer 770, Oceanchem - Light Stabilizer 783, Oceanchem - Light Stabilizer 791, Oceanchem - Light Stabilizer 944, Cel-Span® 717, Cel-Span® UVS 717, POLYULTRA (JHON) 01029, POLYULTRA (PPR) 05013, POLYULTRA (WHITE) 05012 E, POLYULTRA 04005, POLYULTRA 04006, Agrifilm UV MB - 2, PE UVMB - 3, PP UVMB -6, UV MB - 4, UV MB - 5, 130217 UV 10% HINDERED AMINE, KRITILEN® UV 10H, Palst-3346, Palst-3529, Palst-622, Palst-770, Palst-783, PREADD UV 115, PREADD UV 513, Quent® 292, Quent® 622, Quent® 770, Quent® 94, ROMBEST® UV 10H, ROMBEST® UV 111, ROMBEST® UV 1211, ROMBEST® UV 1215, ROMBEST® UV 14H, ROMBEST® UV PP926H, ROMBEST® UV PP941H, ROMBEST® UV PP957H, ROMBEST® UV PP958H, ROMBEST® UV PPP10H, LST 251, LST 252, GlobalPlus™ +Shield™ UV light stabilizers, Sabo® Stab UV 65, Sabo® Stab UV 91, Sabo® Stab UV 91 50PP, Sabo® stab UV 119, Sabo® stab UV 62, UV MB 1, UV MB 2, UV MB 3, UV MB 4, UV MB 5, Ultrasorb 094, Ultrasorb 270, Ultrasorb 322, Songlight® 1190, Songlight® 1230, Songlight® 2920, Songlight® 6220, Songlight® 7700, SUNOVIN® 5593, SUNOVIN® 905, Hindered Amine Light Stabilizer 783, Light Stabilizer 622, Light Stabilizer 770, Light Stabilizer 791, Light Stabilizer 944, ADDITECH™ - stab CC-001, HXA CE 425, HXA UV-770, HXA UV-944, UV 0780 PE, UV 0928 PE, UV 1587 PE, UV 2195 PE, UV 2196 PE, Hydroxylamine sulphate (HAS), UV Masterbatch 1588, Vibatan ABS UV Master 01903, Vibatan EVA Superstabilizer 03296, Vibatan EVA UV Master 00483, Vibatan HDPE UV Master 00037, Vibatan HDPE UV Master 01951, GW-292, GW-622, GW-770, GW-944.

Preferred hindered amine light stabilizers include Chimassorb 2020, Chimassorb 994, Chimassorb 119, CYASORB UV-3346, CYASORB UV-3529, and LOWILITE 94.

As an electron donor modifier, the above described modifiers are added directly to the starting procatalysts (i.e., the working catalysts) with the intention of modifying existing catalyst active sites.

In certain embodiments, the electron donor modifier is a compound including at least a diamine group. In certain embodiments, the electron donor modifier is a compound including at least a 1,3,5-tiazine-2,4,6-triamine group. In certain embodiments, the electron donor modifier is a compound including at least a 2,2,6,6-tetramethylpeperidine group or its derivative. In certain embodiments, the electron donor modifier is a compound including at least one diamine group and at least one 2,2,6,6-tetramethylpeperidine group or its derivative. In certain embodiments, the electron donor modifier is a compound including at least one 1,3,5-tiazine-2,4,6-triamine group and at least one 2,2,6,6-tetramethylpeperidine group or its derivative.

Following treatment of a starting procatalyst with an electron donor modifier to form a procatalyst composition, a final catalyst may be formed by combining the procatalyst composition with a cocatalyst consisting of at least one organometallic compound such as an alkyl or haloalkyl of aluminum, an alkylaluminum halide, a Grignard reagent, an alkali metal aluminum hydride, an alkali metal borohydride, an alkali metal hydride, or an alkaline earth metal hydride. The formation of the final catalyst from the reaction of the procatalyst composition and the organometallic cocatalyst may be carried out *in situ*, or just prior to entering the polymerization reactor. Thus, the combination of the cocatalyst and the procatalyst composition may occur under a wide variety of conditions. Such conditions may include, for example, contacting them under an inert atmosphere such as nitrogen, argon or other inert gas at temperatures in the range from 0 °C to 300 °C, preferably from 15 °C to 250 °C. In the preparation of the catalytic reaction product, it is not necessary to separate hydrocarbon soluble components from hydrocarbon insoluble components. Time for contact between the procatalyst composition and cocatalyst may desirably range, for example, from 0 to 240 seconds, or longer than 5 seconds, preferably from 5 to 120 seconds. Various combinations of these conditions may be employed.

In at least one aspect of the present disclosure, the process for preparing the procatalyst compositions is a one-pot process with no separation or purification of any component. In particular, the solvent used as diluent for the

magnesium halide support remains as part of the slurry of the final procatalyst composition. It is believed that the catalyst components on the magnesium halide support, such as $TiCl_4$ and alkylaluminum halides, may go into the hydrocarbon solvent phase and eventually establish an equilibrium. Separating the soluble material from the insoluble material may cause change to the composition of the procatalyst and thus lead to difference in catalyst performance. In addition, such separation may increase manufacturing cost.

In certain embodiments of the present disclosure, the electron donor modifiers described herein are added to the starting procatalyst before activation by the cocatalyst. In further embodiments of the present disclosure, the electron donor modifiers described herein are added to the starting procatalyst during activation by the cocatalyst. In further embodiments of the present disclosure, the electron donor modifiers described herein are added to the starting procatalyst after activation by the cocatalyst.

In certain embodiments, the one-pot process for preparing a procatalyst composition comprises the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing at least titanium to form a supported titanium compound; and
(c) contacting the supported titanium compound with an electron donor modifier described herein.

In some embodiments, step (c) of the one-pot process of the present disclosure includes addition of the electron donor modifier to the supported titanium compound at a donor/titanium ratio of 0.01 to 100. In certain embodiments, step (c) includes addition of the electron donor modifier to the supported titanium compound at a donor/titanium ratio of 0.1 to 10 and aging for at least 1 minute. In some embodiments, steps (a) to (c) are conducted at a reaction temperature from -50 °C to 100 °C. In certain embodiments, steps (a) to (c) are conducted at a reaction temperature from 10 °C to 50 °C. In some embodiments, the hydrocarbon solvent of step (a) is also present in steps (b) and (c).

*Polymerization Using Procatalyst Compositions*

Once the procatalyst compositions of the present disclosure have been prepared, they are suitable to use for olefin polymerizations. In particular embodiments, these are solution (wherein the temperature is high enough to solubilize the polymer in the carrier) polymerizations to prepare polyethylene (PE) polymers. The prepared PE polymers may include high density polyethylene (HDPE), ultralow density polyethylene (ULDPE), linear low density polyethylene (LLDPE), medium density polyethylene (MDPE), high melt strength high density polyethylene (HMS-HDPE), ultrahigh density polyethylene (UHDPE), or combinations thereof. In general this may be carried out generally in a reaction medium, such as an isoparaffin or other aliphatic hydrocarbon diluents, with the olefin, or a combination of olefins, being brought into contact with the reaction medium in the presence of the procatalyst composition and the cocatalyst. Conditions may be any that are suitable for solution polymerizations.

The polymers formed by the processes of the present invention can be homopolymers of C2-C20 alpha-olefins, such as ethylene, propylene, or 4-methyl-1-pentene, or they may be interpolymers of ethylene or propylene with at least one or more alpha-olefins and/or C2-C20 acetylenically unsaturated monomers and/or C4-C18 diolefins. They may also be interpolymers of ethylene with at least one of the above C3-C20 alpha-olefins, diolefins and/or acetylenically unsaturated monomers in combination with other unsaturated monomers. Those skilled in the art will understand that selected monomers are desirably those that do not destroy conventional Ziegler-Natta catalysts. For example, in one embodiment, ethylene or a mixture of ethylene and from about 0.1 to about 20 weight percent (wt%), for example, from about 0.1 to about 15 wt%, or in the alternative, from about 0.1 to about 10 wt%; or in the alternative, from 0.1 to about 5 weight percent of 1-hexene, 1-octene, or a similar higher $\alpha$-olefin, based on total monomer in the final copolymer, may be successfully polymerized using the process of the present disclosure.

In the polymerization process employing the aforementioned catalytic reaction product, polymerization is effected by adding a catalytic amount of the procatalyst composition to a polymerization reactor containing the selected $\alpha$-olefin monomers. The polymerization reactor is maintained at temperatures in the range from 150 °C to 300 °C, preferably at solution polymerization temperatures, e.g., from 150 °C to 250 °C, for a residence time, in certain embodiments, ranging from 5 minutes to 8 hours. Longer or shorter residence times may alternatively be employed. It is generally desirable to carry out the polymerization in the absence of moisture and oxygen and in the presence of a catalytic amount of the catalytic reaction product that is typically within the range from 0.0001 to about 0.01 milligram-atoms transition metal per liter of diluent. It is understood, however, that the most advantageous catalyst concentration will depend upon polymerization conditions such as temperature, pressure, solvent and the presence of catalyst poisons and that the foregoing range is given for illustrative purposes of one particular embodiment only. For example, pressures may be from 1.03 to 20.68 MPa (150 to 3,000 psi). However, polymerization within the scope of the present disclosure can occur at pressures from atmospheric up to pressures determined by the capabilities of the polymerization equipment.

Generally, in the polymerization process, a carrier which may be an inert organic diluent or solvent or excess monomer is generally employed. Generally care is desirably taken to avoid oversaturation of the solvent with polymer. If such saturation occurs before the catalyst becomes depleted, the full efficiency of the catalyst may not be realized. In particular embodiments, it may be preferable that the amount of polymer in the carrier not exceed 30 percent, based on the total weight of the reaction mixture. It may also be very desirable to stir the polymerization components in order to attain desirable levels of temperature control and to enhance the uniformity of the polymerization throughout the polymerization zone. For example, in the case of relatively more rapid reactions with relatively active catalysts, means may be provided for refluxing monomer and diluent, if diluent is included, thereby removing some of the heat of reaction. In any event, adequate means should be provided for dissipating the exothermic heat of polymerization. Thus, polymerization may be effected in a batch manner, or in a continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

Any conventional ethylene (co)polymerization reaction may be employed to produce the polyethylene composition. Such conventional ethylene (co)polymerization reactions include slurry phase polymerization process, solution phase polymerization process, and combinations thereof using one or more conventional reactors, e.g., loop reactors, stirred tank reactors, batch reactors in parallel, series, and/or any combinations thereof. In certain embodiments, the polymerization reactor may comprise two or more reactors in series, parallel, or combinations thereof. In certain embodiments, the polymerization reactor is one reactor.

The polymerization is desirably carried out as a continuous polymerization, preferably a continuous, solution polymerization, in which catalyst components, monomers, and optionally solvent, adjuvants, scavengers, and polymerization aids are continuously supplied to the reaction zone and polymer product continuously removed therefrom. Within the scope of the terms "continuous" and "continuously" as used in this context are those processes in which there are intermittent additions of reactants and removal of products at small regular or irregular intervals, so that, over time, the overall process is substantially continuous. Both homogeneous and plug-flow type reaction conditions may be employed.

One means for carrying out such a polymerization process is as follows. In a stirred-tank reactor, the monomers to be polymerized are introduced continuously together with any solvent or diluent. The reactor contains a liquid phase composed substantially of monomers together with any solvent or diluent and dissolved polymer. Preferred solvents include $C_{4-10}$ hydrocarbons or mixtures thereof, especially alkanes such as hexane or mixtures of alkanes, as well as one or more of the monomers employed in the polymerization.

Catalysts along with cocatalyst are continuously or intermittently introduced in the reactor liquid phase or any recycled portion thereof. The reactor temperature and pressure may be controlled by adjusting the solvent/monomer ratio, the catalyst addition rate, as well as by cooling or heating coils, jackets or both. The extent of the reaction is controlled by the rate of catalyst addition. The ethylene content of the polymer product is determined by the ratio of ethylene to comonomer in the reactor, which is controlled by manipulating the respective feed rates of these components to the reactor. The polymer product molecular weight is controlled, optionally, by controlling other polymerization variables such as the temperature, monomer concentration, or hydrogen feed rate as is well known in the art. Upon exiting the reactor, the effluent is contacted with a catalyst kill agent such as water, steam or an alcohol. The polymer solution is optionally heated, and the polymer product is recovered by flashing off gaseous monomers as well as residual solvent or diluent at reduced pressure, and, if necessary, conducting further devolatilization in equipment such as a devolatilizing extruder. In a continuous process the mean residence time of the catalyst and polymer in the reactor generally is from 1 minute to 8 hours, and preferably from 5 minutes to 6 hours.

Alternatively, the foregoing polymerization may be carried out in a continuous loop reactor with or without a monomer or catalyst gradient established between differing regions thereof, optionally accompanied by separated addition of catalysts and operating under adiabatic or non-adiabatic solution polymerization conditions or combinations of the foregoing reactor conditions. Examples of suitable loop reactors and a variety of suitable operating conditions for use therewith are found in U.S. Pat. Nos. 5,977,251, 6,319,989 and 6,683,149.

The resulting polymer may further be melt screened. Subsequent to the melting process in the extruder, the molten composition is passed through one or more active screens, positioned in series of more than one, with each active screen having a micron retention size of from about 2 $\mu$m to about 400 $\mu$m (2 to 400 X $10^{-6}$ m), and preferably about 2 $\mu$m to about 300 $\mu$m (2 to 300 X $10^{-6}$ m), and most preferably about 2 $\mu$m to about 70 $\mu$m (2 to 70 X $10^{-6}$ m), at a mass flux of about 5 to about 100 lb/hr/in$^2$ (1.0 to about 20 kg/s/m$^2$). Such further melt screening is disclosed in U.S. Patent No. 6,485,662.

Hydrogen is often employed in the practice of this disclosure, for the purpose of controlling the molecular weight of the resultant polymer. For the purpose of the present disclosure, it is beneficial to employ hydrogen in the polymerization mixture in concentrations ranging preferably from 0.001 to 1 mole per mole of monomer. The larger amounts of hydrogen within this range may be useful to produce generally lower molecular weight polymer. It is generally known to those skilled in the art that hydrogen may be added to the polymerization vessel either with a monomer stream, or separately

therefrom, before, during or after addition of the monomer to the polymerization vessel. However, in preferred embodiments it is highly desirable to ensure that the hydrogen is added either before or during addition of the catalyst, whose catalytic activity is in the range of from 20,000 to 3 million grams of polymer per gram of Ti, such as, for example, from 60,000 to 2 million grams of polymer per gram of Ti.

*Polymer Composition*

The resulting polymer compositions of the present disclosure, based on the polymerization processes described above, may have a polymer density in the range of 0.900 to 0.960 g/cc (e.g., from 0.920 to 0.950 g/cc, from 0.920 to 0.940 g/cc, from 0.920 to 0.935 g/cc, etc.). In certain embodiments, the resulting polymer compositions comprise a polymer density that is at least 0.005 g/cc higher than a polymer composition prepared by the one-pot process of the present disclosure without step (c) (i.e., without contacting the supported titanium compound with an electron donor modifier described herein).

The resulting polymer compositions of the present disclosure may have a high density fraction (HDF) content in crystallization elution fractionation (CEF) of greater than 40 weight percent (e.g., greater than 44 weight percent, greater than 60 weight percent, and/or greater than 65 weight percent). In certain embodiments, the resulting polymer compositions have a HDF content in CEF of at least 9 weight percent higher than a polymer composition prepared by the one-pot process of the present disclosure without step (c) (i.e., without contacting the supported titanium compound with an electron donor modifier described herein).

The resulting polymer compositions of the present disclosure may have a HDF peak temperature (Tp3) of greater than 99.0 °C (e.g., greater than 99.3 °C, greater than 99.5 °C, and/or greater than 99.8 °C). In certain embodiments, the resulting polymer compositions have a HDF peak temperature (Tp3) of at least 0.8 °C higher than a polymer composition prepared by the one-pot process of the present disclosure without step (c) (i.e., without contacting the supported titanium compound with an electron donor modifier described herein).

The resulting polymer compositions of the present disclosure may have a molecular weight ($M_w$) in the range of 50,000 to 300,000 daltons.

The resulting polymer compositions may contain from 0.1 to 300 ppm of a compound having the formula (II) described above.

The resulting polymer compositions may further comprise additional components such as other polymers and/or additives. Such additives include antistatic agents, color enhancers, dyes, lubricants, fillers, pigments, primary antioxidants, secondary antioxidants, processing aids, UV stabilizers, and combinations thereof. The resulting polymer composition may contain any amounts of additives. The resulting polymer compositions may comprise from about 0 to about 10 percent by the combined weight of such additives, based on the weight of the resulting polymer composition including such additives. Antioxidants, such as Irgafos™ 168 and Irganox™ 1010, may be used to protect the resulting polymer composition from thermal and/or oxidative degradation. Irganox™ 1010 is tetrakis (methylene (3,5-di-tert-butyl-4hydroxyhydrocinnamate) available from BASF. Irgafos™ 168 is tris (2,4 di-tert-butylphenyl) phosphite available from BASF.

The resulting polymers produced hereby may include a wide variety of products including high density polyethylenes (HDPE), plastomers, medium density polyethylenes (MDPE), polypropylene and polypropylene copolymers. Useful forming operations for the polymers may include film, sheet, pipe and fiber extrusion and co-extrusion as well as blow molding, injection molding and rotary molding may be pursued. Films include blown or cast films formed by coextrusion or by lamination useful as shrink film, cling film, stretch film, sealing film, oriented film, snack packaging, heavy duty bags, grocery sacks, baked and frozen food packaging, medical packaging, industrial liners, agricultural film applications, and membranes, for example, in food-contact and non-food-contact applications. Fibers include melt spinning, solution spinning and melt blown fiber operations for use in woven and nonwoven form to make filters, diaper fabrics, medical garments and geotextiles. Extruded articles include medical tubing, wire and cable coatings, geomembranes and pond liners. Molded articles include single and multi-layered constructions in the form of bottles, tanks, large hollow articles, rigid food containers and toys.

## EXAMPLES

*Test Methods*

Samples for density measurements were prepared according to ASTM D 4703-10 Annex A1 Procedure C. Approximately 7 g of sample was placed in a "5.08 cm x 5.08 cm x 3.43 mm (2" x 2" x 135 mil) thick" mold, and this was pressed at 190°C (374°F) for six minutes at 13.34 kN (3,000 $lb_f$). Then the pressure was increased to 133.4 kN (30,000 $lb_f$) for four minutes. This was followed by cooling at 15°C per minute, at 133.4 kN (30,000 $lb_f$), to approximately a temperature of 40°C. The "5.08 cm x 5.08 cm x 3.43 mm (2" x 2" x 135 mil)" polymer sample (plaque) was then removed

from the mold, and three samples were cut from the plaque with a 1.27 cm x 2.54 cm (½" x 1") die cutter. Density measurements were made within one hour of sample pressing, using ASTM D792-08, Method B. Density was reported as an average of three measurements.

Melt index (MI), or I2, was measured in accordance with ASTM D 1238-10, Condition 190°C/2.16 kg, Procedure B, and was reported in grams eluted per 10 minutes (g/10 min). I10 was measured in accordance with ASTM D 1238-10, Condition 190°C/10 kg, Procedure B, and was reported in grams eluted per 10 minutes (g/10 min).

For dynamic mechanical spectroscopy testing, resins were compression-molded into "3 mm thick x 2.54 cm (1 inch)" circular plaques at 177 °C (350°F), for 6.5 minutes, under 89.0 kN (20,000 $lb_f$), in air. The sample was then taken out of the press, and placed on the counter to cool. A constant temperature frequency sweep was performed, using a TA Instruments "Advanced Rheometric Expansion System (ARES)," equipped with 25 mm (diameter) parallel plates, under a nitrogen purge. The sample was placed on the plate, and allowed to melt for five minutes at 190°C. The plates were then closed to a gap of 2 mm, the sample trimmed (extra sample that extends beyond the circumference of the "25 mm diameter" plate was removed), and then the test was started. The method had an additional five minute delay built in, to allow for temperature equilibrium. The experiments were performed at 190°C, over a frequency range of 0.1 to 100 rad/s. The strain amplitude was constant at 10%. The complex viscosity $\eta^*$, tan ($\delta$) or tan delta, viscosity at 0.1 rad/s (V0.1), the viscosity at 100 rad/s (V100), and the viscosity ratio (V0.1/V100) were measured.

Melt strength measurements were conducted on a Gottfert Rheotens 71.97 (Göettfert Inc.; Rock Hill, SC), attached to a Gottfert Rheotester 2000 capillary rheometer. The melted sample (about 25 to 30 grams) was fed with a Göettfert Rheotester 2000 capillary rheometer, equipped with a flat entrance angle (180 degrees) of length of 30 mm, diameter of 2.0 mm, and an aspect ratio (length/diameter) of 15. After equilibrating the samples at 190°C for 10 minutes, the piston was run at a constant piston speed of 0.265 mm/second. The standard test temperature was 190°C. The sample was drawn uniaxially to a set of accelerating nips, located 100 mm below the die, with an acceleration of 2.4 $mm/s^2$. The tensile force was recorded as a function of the take-up speed of the nip rolls. The following conditions were used in the melt strength measurements: plunger speed = 0.265 mm/second; wheel acceleration = 2.4 $mm/s^2$; capillary diameter = 2.0 mm; capillary length = 30 mm; and barrel diameter = 12 mm. Melt strength is reported as the plateau force (cN) before the strand broke.

Differential Scanning Calorimetry (DSC) can be used to measure the melting and crystallization behavior of a polymer over a wide range of temperatures. For example, the TA Instruments Q2000 DSC, equipped with an RCS (refrigerated cooling system) and an autosampler is used to perform this analysis. During testing, a nitrogen purge gas flow of 50 ml/min is used. Each sample is melt pressed into a thin film at about 190°C; the melted sample is then air-cooled to room temperature (~25°C). The film sample was formed by pressing a "0.5 to 0.9 gram" sample at 190°C at 89.0 kN (20,000 $lb_f$) and 10 seconds, to form a "2.54 to 5.08 $\mu$m (0.1 to 0.2 mil) thick" film. A 3-10 mg, six mm diameter specimen was extracted from the cooled polymer, weighed, placed in an aluminum pan (about 50 mg), and crimped shut. Analysis was then performed to determine its thermal properties.

The thermal behavior of the sample was determined by ramping the sample temperature up and down to create a heat flow versus temperature profile. First, the sample was rapidly heated to 180°C, and held isothermal for five minutes, in order to remove its thermal history. Next, the sample was cooled to -40°C, at a 10°C/minute cooling rate, and held isothermal at -40°C for five minutes. The sample was then heated to 150°C (this is the "second heat" ramp) at a 10°C/minute heating rate. The cooling and second heating curves are recorded. The cooling curve was analyzed by setting baseline endpoints from the beginning of crystallization to -20°C. The heating curve was analyzed by setting baseline endpoints from -20°C to the end of melting. The values determined were peak melting temperature (Tm), peak crystallization temperature (Tc), heat of fusion (Hf) (in Joules per gram), and the calculated % crystallinity for ethylene-based polymer samples using the following equations:

$$\% \text{ Crystallinity} = ((\text{Hf})/(292 \text{ J/g})) \times 100$$

The heat of fusion and the peak melting temperature are reported from the second heat curve. The peak crystallization temperature is determined from the cooling curve.

For gel permeation chromatography (GPC), the chromatographic system consisted of a PolymerChar GPC-IR (Valencia, Spain) high temperature GPC chromatograph equipped with an internal IR5 detector. The autosampler oven compartment was set at 160° Celsius and the column compartment was set at 150° Celsius. The columns used were 3 Agilent "Mixed B" 30cm 10-micron linear mixed-bed columns and a 10-$\mu$m pre-column. The chromatographic solvent used was 1,2,4 trichlorobenzene and contained 200 ppm of butylated hydroxytoluene (BHT). The solvent source was nitrogen sparged. The injection volume used was 200 microliters and the flow rate was 1.0 milliliters/minute.

Calibration of the GPC column set was performed with 21 narrow molecular weight distribution polystyrene standards with molecular weights ranging from 580 to 8,400,000 and were arranged in 6 "cocktail" mixtures with at least a decade of separation between individual molecular weights. The standards were purchased from Agilent Technologies.

The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 degrees Celsius with gentle agitation for 30 minutes. The polystyrene standard peak molecular weights were converted to polyethylene molecular weights using Equation 1 (as described in Williams and Ward, J. Polym. Sci., Polym. Let., 6, 621 (1968)).:

$$M_{polyethylene} = A \times \left(M_{polystyrene}\right)^B \qquad \text{(EQ1)}$$

where M is the molecular weight, A has a value of 0.4315 and B is equal to 1.0.

A fifth order polynomial was used to fit the respective polyethylene-equivalent calibration points. A small adjustment to A (from approximately 0.415 to 0.44) was made to correct for column resolution and band-broadening effects such that NIST standard NBS 1475 is obtained at 52,000 g/mol Mw.

The total plate count of the GPC column set was performed with Eicosane (prepared at 0.04 g in 50 milliliters of TCB and dissolved for 20 minutes with gentle agitation.) The plate count (Equation 2) and symmetry (Equation 3) was measured on a 200 microliter injection according to the following equations:

$$Plate\ Count = 5.54 * \left(\frac{RV_{Peak\ Max}}{Peak\ Width\ at\ \frac{1}{2} height}\right)^2 \qquad \text{(EQ2)}$$

where *RV* is the retention volume in milliliters, the *peak width* is in milliliters, the *peak max* is the maximum height of the peak, and *½ height* is ½ height of the peak maximum.

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \qquad \text{(EQ3)}$$

where *RV* is the retention volume in milliliters and the *peak width* is in milliliters, *peak max* is the maximum position of the peak, *one tenth height* is 1/10 height of the peak maximum, *rear peak* refers to the peak tail at later retention volumes than the peak max, and *front peak* refers to the peak front at earlier retention volumes than the peak max. The plate count for the chromatographic system should be greater than 24,000 and symmetry should be between 0.98 and 1.22.

Samples were prepared in a semi-automatic manner with the PolymerChar "Instrument Control" Software, wherein the samples were weight-targeted at 2 mg/ml, and the solvent (contained 200ppm BHT) was added to a pre nitrogen-sparged septa-capped vial, via the PolymerChar high temperature autosampler. The samples were dissolved for 2 hours at 160° Celsius under "low speed" shaking.

The calculations of Mn, Mw, and Mz were based on GPC results using the internal IR5 detector (measurement channel) of the PolymerChar GPC-IR chromatograph according to Equations 4-6, using PolymerChar GPCOne™ software, the baseline-subtracted IR chromatogram at each equally-spaced data collection point (i), and the polyethylene equivalent molecular weight obtained from the narrow standard calibration curve for the point (i) from Equation 1.

$$M_n = \frac{\sum^{i} IR_i}{\sum^{i}\left(IR_i / M_{polyethylene_i}\right)} \qquad \text{(EQ 4)}$$

$$M_w = \frac{\sum^{i}\left(IR_i * M_{polyethylene_i}\right)}{\sum^{i} IR_i} \qquad \text{(EQ 5)}$$

$$M_z = \frac{\sum^{i}\left(IR_i * M_{polyethylene_i}{}^{2}\right)}{\sum^{i}\left(IR_i * M_{polyethylene_i}\right)} \quad \text{(EQ 6)}$$

In order to monitor the deviations over time, a flowrate marker (decane) was introduced into each sample via a micropump controlled with the PolymerChar GPC-IR system. This flowrate marker was used to linearly correct the flowrate for each sample by alignment of the respective decane peak within the sample to that of the decane peak within the narrow standards calibration. Any changes in the time of the decane marker peak are then assumed to be related to a linear shift in both flowrate and chromatographic slope. To facilitate the highest accuracy of a RV measurement of the flow marker peak, a least-squares fitting routine is used to fit the peak of the flow marker concentration chromatogram to a quadratic equation. The first derivative of the quadratic equation is then used to solve for the true peak position. After calibrating the system based on a flow marker peak, the effective flowrate (as a measurement of the calibration slope) is calculated as Equation 7. Processing of the flow marker peak was done via the PolymerChar GPCOne™ Software.

$$Flowrate_{effective} = Flowrate_{nominal} \times \frac{FlowMarker_{Calibration}}{FlowMarker_{Observed}} \quad \text{(EQ7)}$$

The Crystallization Elution Fractionation (CEF) technology is conducted according to Monrabal et al, Macromol. Symp. 257, 71-79 (2007). The CEF instrument is equipped with an IR-4 or IR-5 detector (such as that sold commercially from PolymerChar, Spain) and a two angle light scattering detector Model 2040 (such as those sold commercially from Precision Detectors). A 10 micron guard column of 50 mm x 4.6 mm (such as that sold commercially from PolymerLabs) is installed before the IR-4 or IR-5 detector in the detector oven. Ortho-dichlorobenzene (ODCB, 99% anhydrous grade) and 2,5-di-tert-butyl-4-methylphenol (BHT) (such as commercially available from Sigma-Aldrich) are obtained. Silica gel 40 (particle size 0.2~0.5 mm) (such as commercially available from EMD Chemicals) is also obtained. The silica gel is dried in a vacuum oven at 160°C for at least two hours before use. ODCB is sparged with dried nitrogen (N2) for one hour before use. Dried nitrogen is obtained by passing nitrogen at <0.62 mPa (<90 psig) over $CaCO_3$ and 5Å molecular sieves. ODCB is further dried by adding five grams of the dried silica to two liters of ODCB or by pumping through a column or columns packed with dried silica between 0.1ml/min to 1.0ml/min. Eight hundred milligrams of BHT are added to two liters of ODCB if no inert gas such as N2 is used in purging the sample vial. Dried ODCB with or without BHT is hereinafter referred to as "ODCB-m." A sample solution is prepared by, using the autosampler, dissolving a polymer sample in ODCB-m at 4 mg/ml under shaking at 160°C for 2 hours. 300 µL of the sample solution is injected into the column. The temperature profile of CEF is: crystallization at 3°C/min from 110°C to 30°C, thermal equilibrium at 30°C for 5 minutes (including Soluble Fraction Elution Time being set as 2 minutes), and elution at 3°C/min from 30°C to 140°C. The flow rate during crystallization is 0.052 ml/min. The flow rate during elution is 0.50 ml/min. The IR-4 or IR-5 signal data is collected at one data point/second.

The CEF column is packed with glass beads at 125 µm ± 6% (such as those commercially available with acid wash from MO-SCI Specialty Products) with 0.32 cm (1/8 inch) stainless tubing according to U.S. 8,372,931. The internal liquid volume of the CEF column is between 2.1 ml and 2.3 ml. Temperature calibration is performed by using a mixture of NIST Standard Reference Material linear polyethylene 1475a (1.0 mg/ml) and Eicosane (2 mg/ml) in ODCB-m. The calibration consists of four steps: (1) calculating the delay volume defined as the temperature offset between the measured peak elution temperature of Eicosane minus 30.00°C; (2) subtracting the temperature offset of the elution temperature from the CEF raw temperature data. It is noted that this temperature offset is a function of experimental conditions, such as elution temperature, elution flow rate, etc.; (3) creating a linear calibration line transforming the elution temperature across a range of 30.00°C and 140.00°C such that NIST linear polyethylene 1475a has a peak temperature at 101.00°C, and Eicosane has a peak temperature of 30.00°C, (4) for the soluble fraction measured isothermally at 30°C, the elution temperature is extrapolated linearly by using the elution heating rate of 3°C/min. The reported elution peak temperatures are obtained such that the observed comonomer content calibration curve agrees with those previously reported in USP 8,372,931.

The weight percentage of purge fraction (PF; Wt1), copolymer component (Wt2), and high density fraction (HDF; Wt3) are defined as polymer peaks in the following 3 temperature ranges: 25 - 34.5, 34.5 - 92, and 92 - 120°C, respectively. Tp2 and Tp3 are the peak temperatures of the copolymer and HDF in the CEF, respectively.

*Procatalyst Compositions*

The following materials and procedures are used for the preparation of the sample procatalyst compositions of the present disclosure.

Magnesium halide support: Each of the sample procatalyst compositions of the present disclosure is prepared beginning first with preparation of a magnesium halide support. The magnesium halide support is prepared as follows. A 20% n-butylethylmagnesium solution in heptane is diluted into 0.20 M using Isopar E available from Exxon. HCl is slowly added to the n-butylethylmagnesium solution with agitation at 30°C until the Cl/Mg ratio reaches 2.04. The temperature of the reaction mixture is maintained at 30±3°C throughout the reaction. A $MgCl_2$ slurry is obtained without separating solid from liquid.

Starting Procatalysts: Following preparation of the magnesium halide support, starting procatalysts PCAT-1 and PCAT-5 are prepared as a "precursors" (i.e., working catalysts prior to treatment by electron donor modifiers) for the sample procatalysts compositions of the present disclosure. Starting procatalysts PCAT-1 and PCAT-5 are prepared as follows:

Starting Procatalyst 1 ("PCAT-1"): A 15% ethylaluminum dichloride (EADC) solution in heptane is slowly added to the aforementioned $MgCl_2$ slurry at 30°C with agitation until the EADC/Mg ratio reaches 0.3. The temperature of the reaction mixture is maintained at 30±3°C during the addition. The mixture is allowed to age at 30°C for 4 hours. Subsequently, a 51% titanium(IV) isopropoxide solution in heptane is slowly added to the mixture at 30°C with agitation until the Ti/Mg ratio reaches 0.075. The temperature of the reaction mixture is maintained 30±3°C during the addition. The mixture is allowed to age at 30°C for at least 8 hours. Isopar E solvent is used for rinsing for ensuring the accuracy of the catalyst formulation. The final Ti concentration for the finished catalyst is 0.12 M.

Starting Procatalyst 5 ("PCAT-5"): Added slowly to the aforementioned MgCl2 slurry is an ethylaluminum dichloride (EADC) solution in heptane (EADC/MgCl2 = 10/40). After the mixture is allowed to react at ambient temperature with stirring overnight, a freshly prepared mixture of TiCl4 and VOCl3 in Isopar E is introduced slowly (TiCl4/VOCl3/MgCl2 = 1.0/2.0/40), closely followed by a tetrakis(2,2,6,6-tetramethyl-3,5-heptanedionato)zirconium, (Zr(TMHD)4) solution in Isopar E (Zr(TMHD)4/MgCl2 = 0.5/40). The mixture is stirred overnight.

It should be noted that the Isopar E solvent used as a diluent for preparing the magnesium halide support remains as part of the slurry for the finished starting procatalyst. Accordingly, the starting procatalysts PCAT-1 and PCAT-5 are made via a one-pot synthesis with no separation or purification of any component.

Electron Donor Modifiers: To form the sample procatalyst compositions of the present disclosure, starting procatalysts PCAT-1 and PCAT-5 are treated with an electron donor modifier by slowly adding an electron donor modifier solution in Isopar E to the starting procatalysts PCAT-1 and PCAT-5 with agitation at ambient temperature. The reaction mixtures are allowed to age for at least 12 hours before use. In other words, to form the sample procatalyst compositions of the present disclosure, the electron donor modifiers are added directly to the starting procatalyst with the intention of modifying existing catalyst active sites. Electron donor modifiers L through N, as shown in Table 1, are used in the examples of the present disclosure.

**Table 1**

| Donor # | Name | Structure |
|---|---|---|
| **L** | Chimassorb 2020 | 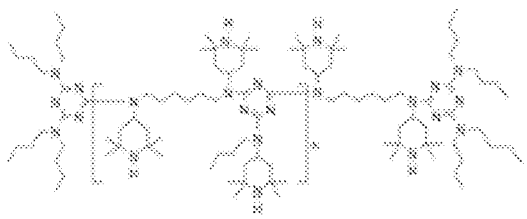 |
| **M** | N,N,N',N'-Tetramethyl-1,6-hexanediamine | 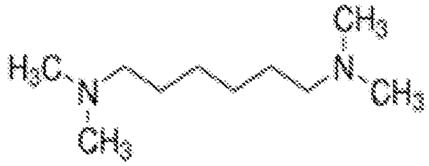 |

(continued)

| Donor # | Name | Structure |
|---|---|---|
| N | 2,4,6-Tris(dimethylamino)-1, 3,5-triazine | 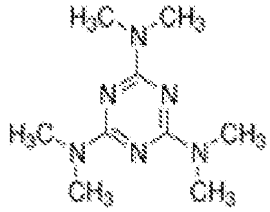 |

Sample procatalyst compositions are prepared and used in the examples disclosed herein based on the combinations of starting procatalysts PCAT-1 and PCAT-5 with electron donor modifiers L to N. The formulations for these sample procatalyst compositions are outlined below in Table 2. Donor L (Chimassorb 2020) is an oligomeric material with a molecular weight (Mw) range of 2600 to 3400 daltons. An average molecular weight (Mw) of 3000 daltons is used for calculating the amounts of the donor used in the procatalyst compositions.

**Table 2**

| Procatalyst Composition | Starting Procatalyst | $MgCl_2$ (mol) | EADC (mol) | $Ti(O\text{-}i\text{-}Pr)_4$ (mol) | $TiCl_4$ (mol) | $VOCl_3$ (mol) | $Zr(TMHD)_4$ (mol) | Electron Donor Modifier | Electron Donor Modifier (mol) | Donor/Ti (mol/mol) |
|---|---|---|---|---|---|---|---|---|---|---|
| | PCAT-1 | 40 | 12 | 3 | -- | -- | -- | -- | -- | -- |
| PCAT-1-L-1 | PCAT-1 | 40 | 12 | 3 | -- | -- | -- | L | 0.34 | 0.11 |
| PCAT-1-L-2 | PCAT-1 | 40 | 12 | 3 | -- | -- | -- | L | 0.69 | 0.23 |
| PCAT-1-M-1 | PCAT-1 | 40 | 12 | 3 | -- | -- | -- | M | 6 | 2 |
| PCAT-1-N-1 | PCAT-1 | 40 | 12 | 3 | -- | -- | -- | N | 6 | 2 |
| | PCAT-5 | 40 | 10 | -- | 1 | 2 | 0.5 | -- | -- | -- |
| PCAT-5-L-1 | PCAT-5 | 40 | 10 | -- | 1 | 2 | 0.5 | L | 0.23 | 0.23 |

*Batch Reactor Polymerization*

The sample procatalyst compositions are evaluated in batch reactor polymerization.

Standard runs of batch reactor polymerization are performed in a stirred one-gallon reactor, which is charged with 250 g of 1-octene and 1330 g of Isopar E (with a total amount of 1580 g). The reactor is heated to 190°C and then saturated with ethylene in the presence of 40 mmol of hydrogen. Starting procatalyst, cocatalyst (triethylaluminum (TEA)), and, optionally, an electron donor modifier solution in Isopar E are mixed and immediately added to the reactor. The reactor pressure is maintained at 3.10 MPa (450 psi) with ethylene flow to compensate ethylene consumption during the polymerization. After 10 minutes reaction time, the bottom valve of the reactor is opened and the content in the reactor is transferred to a glass kettle. Afterwards, the mixture is poured onto a Mylar lined pan, cooled, and allowed to stand in a fume hood overnight to remove most of the solvent via evaporation. The resin is then dried in a vacuum oven.

For the examples listed in Table 3, batch reactor polymerization is carried out using 0.005 mmol of Ti loading of untreated PCAT-1 and a TEA/Ti ratio of 8. Examples marked with asterisks are comparative examples. Examples not marked with asterisks are working examples of the present disclosure.

Catalyst efficiency ("Eff') is calculated based on the amount of ethylene consumed during the polymerization per g of Ti used in the procatalyst composition (g/g Ti). CEF data is also provided for the examples. Specifically, Wt1 refers to the purge fraction (PF), Wt2 refers to the copolymer component, and Wt3 refers to the high density fraction (HDF). Purge fraction, copolymer component, and high density fraction were defined as polymer peaks in 3 temperature ranges: 25-34.5, 34.5-92, and 92-120 °C, respectively. The results below also provide the HDF peak temperature (Tp3) and the copolymer peak temperature (Tp2). The weight average molecular weight (Mw) in g/mol of the polymer from GPC is also provided.

**Table 3**

| Example | Procatalyst | TEA/Ti (mol/mol) | Efficiency (gethylene /g Ti) | Density (g/ cc) | Mw | Wt1 (%) | Wt2 (%) | Wt3 (%) | Tp2 (oC) | Tp3 (oC) |
|---|---|---|---|---|---|---|---|---|---|---|
| 145° | PCAT-1 | 8 | 465450 | 0.9195 | 100849 | 1.57 | 63.38 | 35.01 | 83.64 | 98.62 |
| 155 | PCAT-1-L-1 | 8 | 118353 | 0.9300 | 131377 | 2.75 | 37.11 | 60.09 | 86.19 | 99.52 |
| 156 | PCAT-1-L-2 | 8 | 127792 | 0.9335 | 127586 | 1.21 | 29.55 | 69.24 | 88.05 | 99.85 |
| 158 | PCAT-1-M-1 | 15 | 53371 | 0.9265 | 118650 | 1.57 | 51.90 | 46.51 | 85.86 | 99.69 |
| 160 PCAT-1-N-1 | | 15 | 49741 | 0.9268 | 103077 | 1.85 | 53.36 | 44.78 | 85.17 | 99.48 |
| 161° | PCAT-5 | 20 | 1584675 | 0.9148 | 93970 | 3.04 | 73.80 | 23.11 | 83.24 | 97.89 |
| 162 | PCAT-5-L-1 | 20 | 691342 | 0.9230 | 127169 | 5.23 | 48.65 | 46.05 | 84.01 | 99.33 |

As seen in working examples 155, 156, 158, 160, and 162, catalyst activity loss is observed for all electron donor modified procatalysts. However, treatment of the starting procatalyts with electron donor modifiers L, M, and N surprisingly and unexpectedly exhibits high selectivity in suppressing the formation of copolymer while reducing the comonomer content in the high density fraction (HDF) by exhibiting higher peak temperature (Tp3). Under the same polymerization conditions, starting procatalysts treated with electron donor modifiers L, M, and N show significant increase in polymer density and HDF content relative to the comparative examples with the untreated starting procatalysts. In addition, the HDF peak temperatures for the working examples are higher than those of the comparative examples with the untreated starting procatalysts.

The results in Tables 3 and 4 show that diamine (M) and tris(dimethylamino)-1,3,5-triazine (N) are capable of suppressing the formation of copolymer. However, such capability is not as strong as Chimassorb 2020 even at higher donor/Ti ratios. Chimassorb 2020 is an oligomeric material containing the sub-structures of diamino, 4,6-bis(dialkylamino)-1,3,5-triazin-2-yl, and piperidyl groups. It is speculated that the presence of more than one unit (same or different type) of these 3 types of sub-structures in an oligomeric or polymeric molecule has a synergetic effect that enhances the capability of suppressing copolymer formation.

As seen in Table 4, further examples are prepared where the electron donor modifier is introduced with the starting procatalyst during polymerization or activation by cocatalyst, instead of first adding the electron donor modifier to the starting procatalyst.

**Table 4**

| Example | Procatalyst | Donor/Ti (mol/mol) | Electron Donor | Efficiency (gethylene/g Ti) | Density (g/cc) | Mw | Wt1 (%) | Wt2 (%) | Wt3 (%) | Tp2 (oC) | Tp3 (oC) |
|---|---|---|---|---|---|---|---|---|---|---|---|
| 145* | PCAT-1 | | | 465450 | 0.9195 | 100849 | 1.57 | 63.38 | 35.01 | 83.64 | 98.62 |
| 152 | PCAT-1 | 0.11 | L | 191898 | 0.9291 | 138273 | 1.69 | 39.37 | 58.96 | 86.06 | 99.51 |
| 153 | PCAT-1 | 0.23 | L | 137558 | | 122472 | 2.03 | 38.66 | 59.29 | 85.52 | 99.63 |
| 154 | PCAT-1 | 0.46 | L | 139178 | 0.9321 | 140984 | 1.72 | 32.34 | 65.90 | 85.93 | 99.62 |

As seen in Table 4, electron donor modifier L, when added to the starting procatalyst during activation by cocatalyst or polymerization, also surprisingly and unexpectedly exhibits high selectivity in suppressing the formation of copolymer while reducing the comonomer content in the high density fraction (HDF) by exhibiting higher peak temperature (Tp3). Electron donor modifier L, when added to the starting procatalyst during activation by cocatalyst or polymerization, shows significant increase in polymer density and HDF content relative to the comparative example. Electron donor modifier L, when added to the starting procatalyst during activation by cocatalyst or polymerization, also shows the HDF peak temperatures for the working examples are higher than that of the comparative example.

Accordingly, the present disclosure relates to the surprising and unexpected discovery of novel procatalyst compositions formed through treatment by certain electron donor modifiers that substantially suppress copolymerization reactions and, thus, produce higher density polymers with low level of comonomer incorporation for solution process polymerization. These new catalysts provide the additional capacity to expand the design window of PE production, including PE production requiring one of the linked reactors to produce a portion of polymer with high level of comonomer and another reactor to produce a portion of polymer with low level of comonomer.

## Claims

1. A process for preparing a procatalyst composition comprising the steps of

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (II):

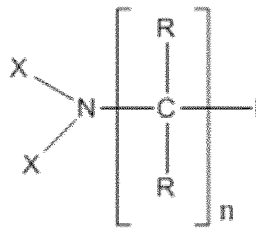

(II),

wherein:

n is from 3 to 12;
R is hydrogen or a $C_1$-$C_{20}$ hydrocarbyl that is optionally substituted with one or more heteroatoms; and
X is hydrogen or a $C_1$-$C_{20}$ hydrocarbyl that is optionally substituted with one or more heteroatoms.

2. A solution process for polymerization of ethylene and at least one additional polymerizable monomer to form a polymer composition, the process comprising:

contacting ethylene and the additional polymerizable monomer with a catalyst composition under polymerization conditions;
wherein the catalyst composition comprises a procatalyst composition and an alkyl-aluminum cocatalyst;
wherein the additional polymerizable monomer is a $C_{3-20}$ $\alpha$-olefin; and
wherein the procatalyst composition is prepared according to a process comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (II):

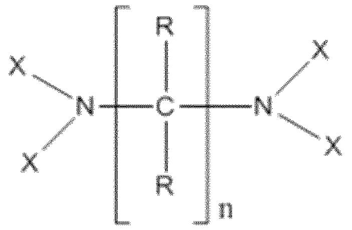

(II),

wherein:

n is from 3 to 12;
R is hydrogen or a $C_1$-$C_{20}$ hydrocarbyl that is optionally substituted with one or more heteroatoms; and
X is hydrogen or a $C_1$-$C_{20}$ hydrocarbyl that is optionally substituted with one or more heteroatoms.

**3.** A process for preparing a procatalyst composition comprising the steps of

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (III):

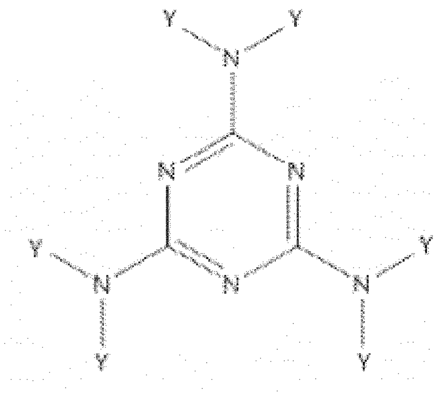

(III),

wherein:
Y is hydrogen or a $C_1$-$C_{20}$ hydrocarbyl that is optionally substituted with one or more heteroatoms.

**4.** A solution process for polymerization of ethylene and at least one additional polymerizable monomer to form a polymer composition, the process comprising:

contacting ethylene and the additional polymerizable monomer with a catalyst composition under polymerization conditions;
wherein the catalyst composition comprises a procatalyst composition and an alkyl-aluminum cocatalyst;
wherein the additional polymerizable monomer is a $C_{3-20}$ $\alpha$-olefin; and
wherein the procatalyst composition is prepared according to a process comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier having the formula (III):

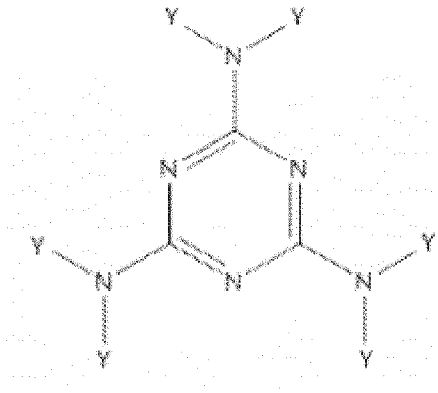

(III),

wherein:
Y is hydrogen or a $C_1$-$C_{20}$ hydrocarbyl that is optionally substituted with one or more heteroatoms.

**5.** A process for preparing a procatalyst composition comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier; wherein the electron donor modifier is an oligomeric or polymeric compound comprising more than one unit of at least one of the following:

(a) a compound having the formula (II):

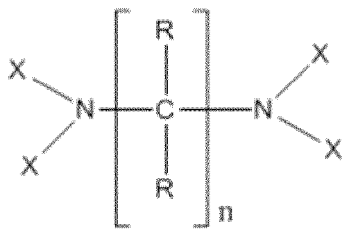

(II),

(b) a compound having the formula (III):

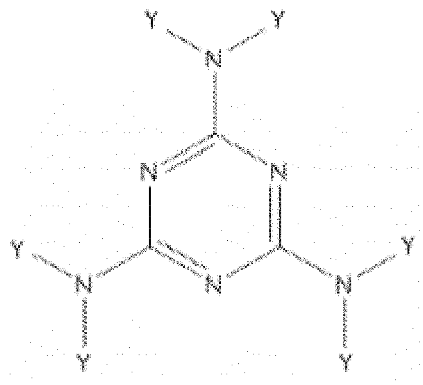

(III),

or
(c) a compound having a substituted or unsubstituted piperidyl group, wherein

n is from 3 to 12;
R is hydrogen or a $C_1$-$C_{20}$ hydrocarbyl that is optionally substituted with one or more heteroatoms;

X is hydrogen or a $C_1$-$C_{20}$ hydrocarbyl that is optionally substituted with one or more heteroatoms; and
Y is hydrogen or a $C_1$-$C_{20}$ hydrocarbyl that is optionally substituted with one or more heteroatoms.

**6.** A solution process for polymerization of ethylene and at least one additional polymerizable monomer to form a polymer composition, the process comprising:

contacting ethylene and the additional polymerizable monomer with a catalyst composition under polymerization conditions;
wherein the catalyst composition comprises a procatalyst composition and an alkyl-aluminum cocatalyst;
wherein the additional polymerizable monomer is a $C_{3-20}$ $\alpha$-olefin; and
wherein the procatalyst composition is prepared according to a process comprising the steps of:

(a) reacting a hydrocarbon-soluble organomagnesium compound or complex thereof in a hydrocarbon solvent with an active non-metallic or metallic halide to form a magnesium halide support;
(b) contacting the magnesium halide support and a compound containing titanium to form a supported titanium procatalyst; and
(c) contacting the supported titanium procatalyst with an electron donor modifier; wherein the electron donor modifier is an oligomeric or polymeric compound comprising more than one unit of at least one of the following:

(a) a compound having the formula (II):

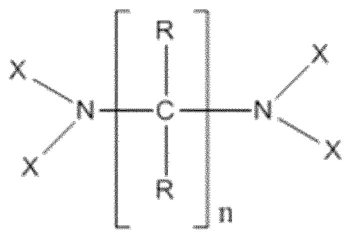

(II),

(b) a compound having the formula (III):

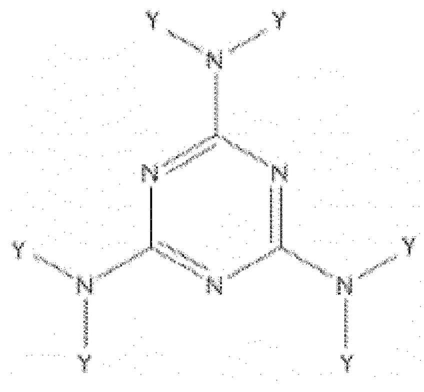

(III),

or
(c) a compound having a substituted or unsubstituted piperidyl group,
wherein

n is from 3 to 12;
R is hydrogen or a $C_1$-$C_{20}$ hydrocarbyl that is optionally substituted with one or more heteroatoms;
X is hydrogen or a $C_1$-$C_{20}$ hydrocarbyl that is optionally substituted with one or more heteroatoms; and
Y is hydrogen or a $C_1$-$C_{20}$ hydrocarbyl that is optionally substituted with one or more heteroatoms.

## Patentansprüche

1. Ein Verfahren zum Herstellen einer Prokatalysatorzusammensetzung, das die folgenden Schritte beinhaltet:

   (a) Umsetzen einer kohlenwasserstofflöslichen Organomagnesiumverbindung oder eines Komplexes davon in einem Kohlenwasserstofflösemittel mit einem aktiven Nichtmetall- oder Metallhalogenid, um einen Magnesiumhalogenidträger zu bilden;
   (b) In-Kontakt-Bringen des Magnesiumhalogenidträgers und einer Titan enthaltenden Verbindung, um einen geträgerten Titanprokatalysator zu bilden; und
   (c) In-Kontakt-Bringen des geträgerten Titanprokatalysators mit einem die Formel (II) aufweisenden Elektronendonormodifizierer:

   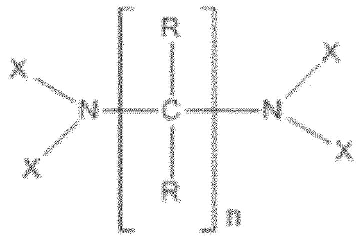

   (II),

   wobei:

   n von 3 bis 12 beträgt;
   R Wasserstoff oder ein $C_1$-$C_{20}$-Hydrocarbyl ist, das wahlweise mit einem oder mehreren Heteroatomen substituiert ist; und
   X Wasserstoff oder ein $C_1$-$C_{20}$-Hydrocarbyl ist, das wahlweise mit einem oder mehreren Heteroatomen substituiert ist.

2. Ein Lösungsverfahren zur Polymerisation von Ethylen und mindestens einem zusätzlichen polymerisierbaren Monomer, um eine Polymerzusammensetzung zu bilden, wobei das Verfahren Folgendes beinhaltet:

   In-Kontakt-Bringen von Ethylen und dem zusätzlichen polymerisierbaren Monomer mit einer Katalysatorzusammensetzung unter Polymerisationsbedingungen;
   wobei die Katalysatorzusammensetzung eine Prokatalysatorzusammensetzung und einen Alkylaluminiumcokatalysator beinhaltet;
   wobei das zusätzliche polymerisierbare Monomer ein $C_{3-20}$-$\alpha$-Olefin ist; und
   wobei die Prokatalysatorzusammensetzung gemäß einem Verfahren hergestellt wird, das die folgenden Schritte beinhaltet:

   (a) Umsetzen einer kohlenwasserstofflöslichen Organomagnesiumverbindung oder eines Komplexes davon in einem Kohlenwasserstofflösemittel mit einem aktiven Nichtmetall- oder Metallhalogenid, um einen Magnesiumhalogenidträger zu bilden;
   (b) In-Kontakt-Bringen des Magnesiumhalogenidträgers und einer Titan enthaltenden Verbindung, um einen geträgerten Titanprokatalysator zu bilden; und
   (c) In-Kontakt-Bringen des geträgerten Titanprokatalysators mit einem die Formel (II) aufweisenden Elektronendonormodifizierer:

   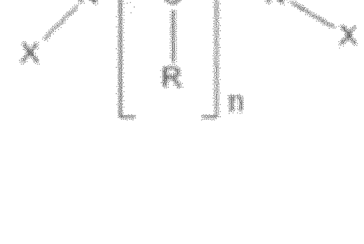

   (II),

wobei:
n von 3 bis 12 beträgt;

R Wasserstoff oder ein $C_1$-$C_{20}$-Hydrocarbyl ist, das wahlweise mit einem oder mehreren Heteroatomen substituiert ist; und
X Wasserstoff oder ein $C_1$-$C_{20}$-Hydrocarbyl ist, das wahlweise mit einem oder mehreren Heteroatomen substituiert ist.

**3.** Ein Verfahren zum Herstellen einer Prokatalysatorzusammensetzung, das die folgenden Schritte beinhaltet:

(a) Umsetzen einer kohlenwasserstofflöslichen Organomagnesiumverbindung oder eines Komplexes davon in einem Kohlenwasserstofflösemittel mit einem aktiven Nichtmetall- oder Metallhalogenid, um einen Magnesiumhalogenidträger zu bilden;
(b) In-Kontakt-Bringen des Magnesiumhalogenidträgers und einer Titan enthaltenden Verbindung, um einen geträgerten Titanprokatalysator zu bilden; und
(c) In-Kontakt-Bringen des geträgerten Titanprokatalysators mit einem die Formel (III) aufweisenden Elektronendonormodifizierer:

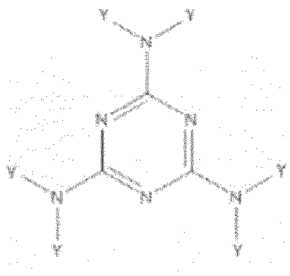
(III),

wobei:
Y Wasserstoff oder ein $C_1$-$C_{20}$-Hydrocarbyl ist, das wahlweise mit einem oder mehreren Heteroatomen substituiert ist.

**4.** Ein Lösungsverfahren zur Polymerisation von Ethylen und mindestens einem zusätzlichen polymerisierbaren Monomer, um eine Polymerzusammensetzung zu bilden, wobei das Verfahren Folgendes beinhaltet:

In-Kontakt-Bringen von Ethylen und dem zusätzlichen polymerisierbaren Monomer mit einer Katalysatorzusammensetzung unter Polymerisationsbedingungen;
wobei die Katalysatorzusammensetzung eine Prokatalysatorzusammensetzung und einen Alkylaluminiumcokatalysator beinhaltet;
wobei das zusätzliche polymerisierbare Monomer ein $C_{3-20}$-$\alpha$-Olefin ist; und
wobei die Prokatalysatorzusammensetzung gemäß einem Verfahren hergestellt wird, das die folgenden Schritte beinhaltet:

(a) Umsetzen einer kohlenwasserstofflöslichen Organomagnesiumverbindung oder eines Komplexes davon in einem Kohlenwasserstofflösemittel mit einem aktiven Nichtmetall- oder Metallhalogenid, um einen Magnesiumhalogenidträger zu bilden;
(b) In-Kontakt-Bringen des Magnesiumhalogenidträgers und einer Titan enthaltenden Verbindung, um einen geträgerten Titanprokatalysator zu bilden; und
(c) In-Kontakt-Bringen des geträgerten Titanprokatalysators mit einem die Formel (III) aufweisenden Elektronendonormodifizierer:

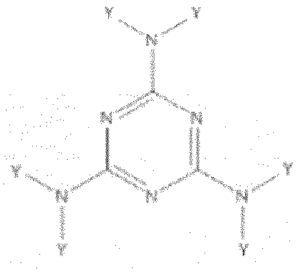

(III),

wobei:
Y Wasserstoff oder ein $C_1$-$C_{20}$-Hydrocarbyl ist, das wahlweise mit einem oder mehreren Heteroatomen substituiert ist.

**5.** Ein Verfahren zum Herstellen einer Prokatalysatorzusammensetzung, das die folgenden Schritte beinhaltet:

(a) Umsetzen einer kohlenwasserstofflöslichen Organomagnesiumverbindung oder eines Komplexes davon in einem Kohlenwasserstofflösemittel mit einem aktiven Nichtmetall- oder Metallhalogenid, um einen Magnesiumhalogenidträger zu bilden;
(b) In-Kontakt-Bringen des Magnesiumhalogenidträgers und einer Titan enthaltenden Verbindung, um einen geträgerten Titanprokatalysator zu bilden; und
(c) In-Kontakt-Bringen des geträgerten Titanprokatalysators mit einem Elektronendonormodifizierer; wobei der Elektronendonormodifizierer eine oligomere oder polymere Verbindung ist, die mehr als eine Einheit von mindestens einem der Folgenden beinhaltet:

(a) einer Verbindung mit der Formel (II):

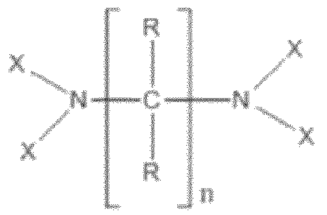

(II),

(b) einer Verbindung mit der Formel (III):

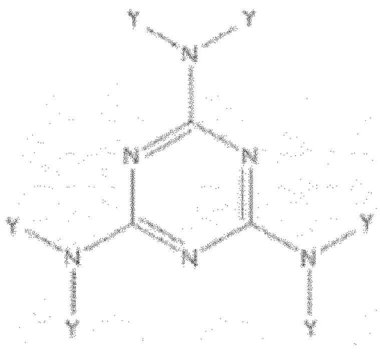

(III)

oder
(c) einer Verbindung mit einer substituierten oder unsubstituierten Piperidylgruppe, wobei

n von 3 bis 12 beträgt;
R Wasserstoff oder ein $C_1$-$C_{20}$-Hydrocarbyl ist, das wahlweise mit einem oder mehreren Heteroatomen substituiert ist;
X Wasserstoff oder ein $C_1$-$C_{20}$-Hydrocarbyl ist, das wahlweise mit einem oder mehreren Heteroatomen

substituiert ist; und
Y Wasserstoff oder ein $C_1$-$C_{20}$-Hydrocarbyl ist, das wahlweise mit einem oder mehreren Heteroatomen substituiert ist.

**6.** Ein Lösungsverfahren zur Polymerisation von Ethylen und mindestens einem zusätzlichen polymerisierbaren Monomer, um eine Polymerzusammensetzung zu bilden, wobei das Verfahren Folgendes beinhaltet:

In-Kontakt-Bringen von Ethylen und dem zusätzlichen polymerisierbaren Monomer mit einer Katalysatorzusammensetzung unter Polymerisationsbedingungen;
wobei die Katalysatorzusammensetzung eine Prokatalysatorzusammensetzung und einen Alkylaluminiumcokatalysator beinhaltet;
wobei das zusätzliche polymerisierbare Monomer ein $C_{3-20}$-$\alpha$-Olefin ist; und
wobei die Prokatalysatorzusammensetzung gemäß einem Verfahren hergestellt wird, das die folgenden Schritte beinhaltet:

(a) Umsetzen einer kohlenwasserstofflöslichen Organomagnesiumverbindung oder eines Komplexes davon in einem Kohlenwasserstofflösemittel mit einem aktiven Nichtmetall- oder Metallhalogenid, um einen Magnesiumhalogenidträger zu bilden;
(b) In-Kontakt-Bringen des Magnesiumhalogenidträgers und einer Titan enthaltenden Verbindung, um einen geträgerten Titanprokatalysator zu bilden; und
(c) In-Kontakt-Bringen des geträgerten Titanprokatalysators mit einem Elektronendonormodifizierer; wobei der Elektronendonormodifizierer eine oligomere oder polymere Verbindung ist, die mehr als eine Einheit von mindestens einem der Folgenden beinhaltet:

(a) eine Verbindung mit der Formel (II):

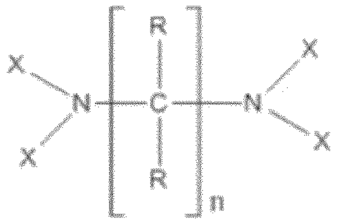

(II),

(b) eine Verbindung mit der Formel (III):

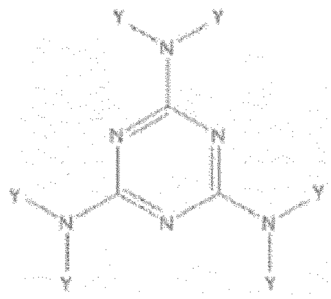

(III)

oder
(c) eine Verbindung mit einer substituierten oder unsubstituierten Piperidylgruppe,
wobei

n von 3 bis 12 beträgt;
R Wasserstoff oder ein $C_1$-$C_{20}$-Hydrocarbyl ist, das wahlweise mit einem oder mehreren Heteroatomen substituiert ist;
X Wasserstoff oder ein $C_1$-$C_{20}$-Hydrocarbyl ist, das wahlweise mit einem oder mehreren Heteroatomen substituiert ist; und

Y Wasserstoff oder ein $C_1$-$C_{20}$-Hydrocarbyl ist, das wahlweise mit einem oder mehreren Heteroatomen substituiert ist.

## Revendications

**1.** Un procédé pour préparer une composition de procatalyseur comprenant les étapes de :

(a) mise en réaction d'un composé d'organomagnésium soluble dans les hydrocarbures ou d'un complexe de celui-ci dans un solvant hydrocarboné avec un halogénure métallique ou non métallique actif afin de former un support halogénure de magnésium ;
(b) mise en contact du support halogénure de magnésium et d'un composé contenant du titane afin de former un procatalyseur au titane sur support ; et
(c) mise en contact du procatalyseur au titane sur support avec un modificateur donneur d'électrons ayant la formule (II) :

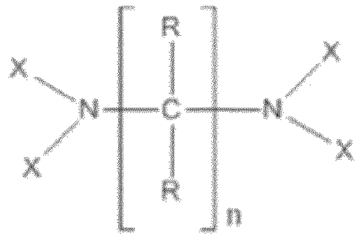

(II),

dans laquelle :

n va de 3 à 12 ;
R est l'hydrogène ou un hydrocarbyle en $C_1$ à $C_{20}$ qui est facultativement substitué par un ou plusieurs hétéroatomes ; et
X est l'hydrogène ou un hydrocarbyle en $C_1$ à $C_{20}$ qui est facultativement substitué par un ou plusieurs hétéroatomes.

**2.** Un procédé en solution pour la polymérisation d'éthylène et d'au moins un monomère polymérisable supplémentaire afin de former une composition de polymère, le procédé comprenant :

la mise en contact d'éthylène et du monomère polymérisable supplémentaire avec une composition de catalyseur dans des conditions de polymérisation ;
dans lequel la composition de catalyseur comprend une composition de procatalyseur et un cocatalyseur alkylaluminium ;
dans lequel le monomère polymérisable supplémentaire est une $\alpha$-oléfine en $C_3$ à $C_{20}$ ; et
dans lequel la composition de procatalyseur est préparée selon un procédé comprenant les étapes de :

(a) mise en réaction d'un composé d'organomagnésium soluble dans les hydrocarbures ou d'un complexe de celui-ci dans un solvant hydrocarboné avec un halogénure métallique ou non métallique actif afin de former un support halogénure de magnésium ;
(b) mise en contact du support halogénure de magnésium et d'un composé contenant du titane afin de former un procatalyseur au titane sur support ; et
(c) mise en contact du procatalyseur au titane sur support avec un modificateur donneur d'électrons ayant la formule (II) :

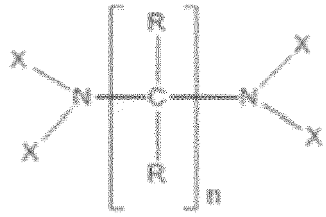

(II),

dans laquelle :

n vade3 à 12 ;
R est l'hydrogène ou un hydrocarbyle en $C_1$ à $C_{20}$ qui est facultativement substitué par un ou plusieurs hétéroatomes ; et
X est l'hydrogène ou un hydrocarbyle en $C_1$ à $C_{20}$ qui est facultativement substitué par un ou plusieurs hétéroatomes.

**3.** Un procédé pour préparer une composition de procatalyseur comprenant les étapes de

(a) mise en réaction d'un composé d'organomagnésium soluble dans les hydrocarbures ou d'un complexe de celui-ci dans un solvant hydrocarboné avec un halogénure métallique ou non métallique actif afin de former un support halogénure de magnésium ;
(b) mise en contact du support halogénure de magnésium et d'un composé contenant du titane afin de former un procatalyseur au titane sur support ; et
(c) mise en contact du procatalyseur au titane sur support avec un modificateur donneur d'électrons ayant la formule (III) :

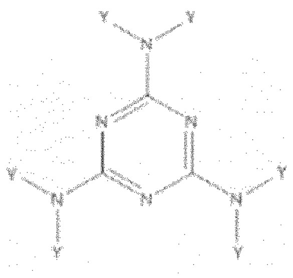

(III),

dans laquelle :
Y est l'hydrogène ou un hydrocarbyle en $C_1$ à $C_{20}$ qui est facultativement substitué par un ou plusieurs hétéroatomes.

**4.** Un procédé en solution pour la polymérisation d'éthylène et d'au moins un monomère polymérisable supplémentaire afin de former une composition de polymère, le procédé comprenant :

la mise en contact d'éthylène et du monomère polymérisable supplémentaire avec une composition de catalyseur dans des conditions de polymérisation ;
dans lequel la composition de catalyseur comprend une composition de procatalyseur et un cocatalyseur alkylaluminium ;
dans lequel le monomère polymérisable supplémentaire est une $\alpha$-oléfine en $C_3$ à $C_{20}$ ; et
dans lequel la composition de procatalyseur est préparée selon un procédé comprenant les étapes de :

(a) mise en réaction d'un composé d'organomagnésium soluble dans les hydrocarbures ou d'un complexe de celui-ci dans un solvant hydrocarboné avec un halogénure métallique ou non métallique actif afin de former un support halogénure de magnésium ;
(b) mise en contact du support halogénure de magnésium et d'un composé contenant du titane afin de former un procatalyseur au titane sur support ; et
(c) mise en contact du procatalyseur au titane sur support avec un modificateur donneur d'électrons ayant la formule (III) :

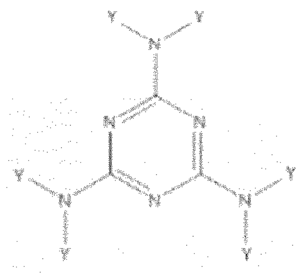

(III),

dans laquelle :
Y est l'hydrogène ou un hydrocarbyle en $C_1$ à $C_{20}$ qui est facultativement substitué par un ou plusieurs hétéroatomes.

**5.** Un procédé pour préparer une composition de procatalyseur comprenant les étapes de :

(a) mise en réaction d'un composé d'organomagnésium soluble dans les hydrocarbures ou d'un complexe de celui-ci dans un solvant hydrocarboné avec un halogénure métallique ou non métallique actif afin de former un support halogénure de magnésium ;
(b) mise en contact du support halogénure de magnésium et d'un composé contenant du titane afin de former un procatalyseur au titane sur support ; et
(c) mise en contact du procatalyseur au titane sur support avec un modificateur donneur d'électrons ; dans lequel le modificateur donneur d'électrons est un composé oligomère ou polymère comprenant plus d'une unité d'au moins l'un des éléments suivants :

(a) un composé ayant la formule (II) :

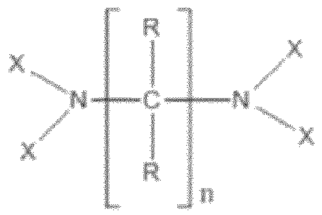

(II),

(b) un composé ayant la formule (III) :

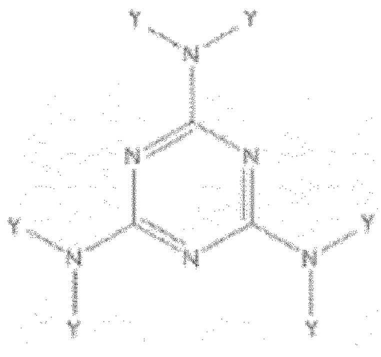

(III),

ou
(c) un composé ayant un groupe pipéridyle substitué ou non substitué,
dans lequel

n vade3 à 12 ;
R est l'hydrogène ou un hydrocarbyle en $C_1$ à $C_{20}$ qui est facultativement substitué par un ou plusieurs hétéroatomes ;

X est l'hydrogène ou un hydrocarbyle en $C_1$ à $C_{20}$ qui est facultativement substitué par un ou plusieurs hétéroatomes ; et
Y est l'hydrogène ou un hydrocarbyle en $C_1$ à $C_{20}$ qui est facultativement substitué par un ou plusieurs hétéroatomes.

**6.** Un procédé en solution pour la polymérisation d'éthylène et d'au moins un monomère polymérisable supplémentaire afin de former une composition de polymère, le procédé comprenant :

la mise en contact d'éthylène et du monomère polymérisable supplémentaire avec une composition de catalyseur dans des conditions de polymérisation ;
dans lequel la composition de catalyseur comprend une composition de procatalyseur et un cocatalyseur alkylaluminium ;
dans lequel le monomère polymérisable supplémentaire est une $\alpha$-oléfine en $C_3$ à $C_{20}$ ; et
dans lequel la composition de procatalyseur est préparée selon un procédé comprenant les étapes de :

(a) mise en réaction d'un composé d'organomagnésium soluble dans les hydrocarbures ou d'un complexe de celui-ci dans un solvant hydrocarboné avec un halogénure métallique ou non métallique actif afin de former un support halogénure de magnésium ;
(b) mise en contact du support halogénure de magnésium et d'un composé contenant du titane afin de former un procatalyseur au titane sur support ; et
(c) mise en contact du procatalyseur au titane sur support avec un modificateur donneur d'électrons ; dans lequel le modificateur donneur d'électrons est un composé oligomère ou polymère comprenant plus d'une unité d'au moins l'un des éléments suivants :

(a) un composé ayant la formule (II) :

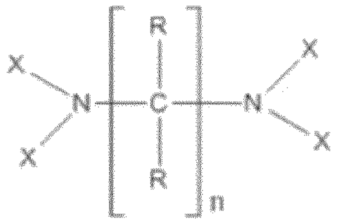

(II),

(b) un composé ayant la formule (III) :

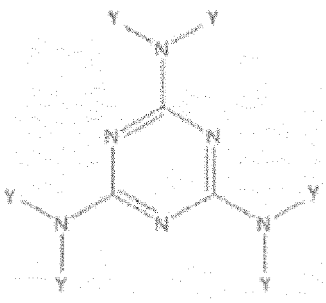

(III),

ou
(c) un composé ayant un groupe pipéridyle substitué ou non substitué,
dans lequel

n va de 3 à 12 ;
R est l'hydrogène ou un hydrocarbyle en $C_1$ à $C_{20}$ qui est facultativement substitué par un ou plusieurs hétéroatomes ;
X est l'hydrogène ou un hydrocarbyle en $C_1$ à $C_{20}$ qui est facultativement substitué par un ou plusieurs hétéroatomes ; et

Y est l'hydrogène ou un hydrocarbyle en $C_1$ à $C_{20}$ qui est facultativement substitué par un ou plusieurs hétéroatomes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4960593 A
- US 5977251 A
- US 6319989 B
- US 6683149 B
- US 6485662 B
- US 8372931 B
- US P8372931 A


### Non-patent literature cited in the description


- Periodic Table of the Elements published and copyrighted. CRC Press, Inc, 1990
- **WILLIAMS ; WARD.** *J. Polym. Sci., Polym. Let.,* 1968, vol. 6, 621
- **MONRABAL et al.** *Macromol. Symp.,* 2007, vol. 257, 71-79